# EUROPEAN PATENT APPLICATION

(11) **EP 4 472 256 A1**
(43) Date of publication of application: **04.12.2024**
(21) Application number: 24719035.8
(22) Date of filing: 28.03.2024
(51) Int. Cl.: H04W 8/18, H04W 60/00, H04W 8/26, H04W 88/06

(54) **ELECTRONIC DEVICE COMPRISING PLURALITY OF SUBSCRIBER IDENTITY MODULES, AND OPERATION METHOD THEREOF**

(30) Priority: 17.04.2023 KR 20230050015; 02.06.2023 KR 20230071431
(71) Applicant: Samsung Electronics Co., Ltd., Suwon-si, Gyeonggi-do 16677 (KR)
(72) Inventor: OH, Haesung, Suwon-si, Gyeonggi-do 16677 (KR); KIM, Dongho, Suwon-si, Gyeonggi-do 16677 (KR); LEE, Soomin, Suwon-si, Gyeonggi-do 16677 (KR); LEE, Kyunghoon, Suwon-si, Gyeonggi-do 16677 (KR)
(74) Representative: Nederlandsch Octrooibureau
(86) International application number: PCT/KR2024/003967
(87) International publication number: WO 2024/219697

(57) **Abstract**

Various embodiments of the disclosure relate to an apparatus and a method for allocating an IMEI in an electronic device including multiple SIMs. According to various embodiments, the electronic device may include a memory configured to store multiple IMEIs, a first subscriber identity module, a second subscriber identity module, a communication circuit, and at least one processor operatively connected to the memory, the first subscriber identity module, the second subscriber identity module, and the communication circuit. The at least one processor may perform a service establishment procedure related to the first subscriber identity module, based on the first IMEI among the multiple IMEIs, in case that service establishment related to the first subscriber identity module based on the first IMEI has failed, may identify a second IMEI different from the first IMEI among the multiple IMEIs, and may perform a service establishment procedure related to the first subscriber identity module, based on the second IMEI. Other embodiments may be possible.

## Description

### [Technical Field]

Embodiments of the disclosure relate to an apparatus for managing the international mobile equipment identity (IMEI) of each subscriber identity module (SIM) in an electronic device including multiple SIMs, and a method for operating the same.

### [Background Art]

An electronic device may include a SIM configured to manage personal information related to various functions such as user authentication, accounting, and security functions.

The electronic device may perform wireless communication, based on subscriber identity information stored in the SIM. When including multiple SIMs, the electronic device may perform wireless communication, based on subscriber identity information stored in each SIM.

### [Disclosure of Invention]

### [Technical Problem]

Multiple SIMs included in an electronic device may have different IMEIs allocated thereto. The electronic device may perform a service establishment (or activation) procedure related to each SIM, based on the IMEI of each SIM. As an example, the service establishment may include a series of operations for getting approval for access to a communication service in a network (for example, a wireless network).

If a specific network requires that a specific IMEI be used, the electronic device may fail to establish a service related to a SIM including an IMEI which is not required to be used by the specific network, e.g. another IMEI not corresponding to the specific IMEI. The electronic device may have limited use of at least one SIM including an IMEI which is not required to be used by the specific network among multiple SIMs.

An embodiment of the disclosure provides an apparatus and a method for managing the IMEI of each SIM in an electronic device including multiple SIMs. The present disclosure provides an apparatus and a method for managing the IMEI of each SIM in an electronic device including multiple SIMs. The apparatus and the method can process and/or manage multiple SIMs and multiple IMEIs related thereto so as to efficiently perform service establishment procedure.

Technical problems to be solved by the disclosure are not limited to the above-mentioned technical problems, and other technical problems not mentioned herein will be clearly understood from the following description by those skilled in the art to which the disclosure pertains.

### [Solution to Problem]

According to an embodiment, an electronic device may include a memory configured to store multiple IMEIs, a first subscriber identity module, a second subscriber identity module, a communication circuitry, and at least one processor. According to an embodiment, the processor may perform a service establishment procedure related to the first subscriber identity module, based on the first IMEI among the multiple IMEIs. According to an embodiment, in case that service establishment related to the first subscriber identity module based on the first IMEI has failed, the processor may identify a second IMEI different from the first IMEI among the multiple IMEIs. According to an embodiment, the processor may perform a service establishment procedure related to the first subscriber identity module, based on the second IMEI.

According to an embodiment, a method for operating an electronic device including a first subscriber identity module and a second subscriber identity module may include an operation of performing a service establishment procedure related to the first subscriber identity module, based on a first IMEI among multiple IMEIs. According to an embodiment, the method for operating an electronic device may include an operation of, in case that service establishment related to the first subscriber identity module based on the first IMEI has failed, identifying a second IMEI different from the first IMEI among the multiple IMEIs. According to an embodiment, the method for operating an electronic device may include an operation of performing a service establishment procedure related to the first subscriber identity module, based on the second IMEI.

According to an embodiment, a non-transitory computer-readable storage medium (or a computer program product) in which one or more programs are stored may be described. According to an embodiment, the one or more programs may include instructions which, when executed by a processor of an electronic device, perform an operation of performing a service establishment procedure related to the first subscriber identity module, based on a first IMEI among multiple international mobile equipment identities (IMEIs) stored in the electronic device, an operation of, in case that service establishment related to the first subscriber identity module based on the first IMEI has failed, identifying a second IMEI different from the first IMEI among the multiple IMEIs, and an operation of performing a service establishment procedure related to the first subscriber identity module, based on the second IMEI.

According to an embodiment of the disclosure, an electronic device including multiple subscriber identity modules may dynamically allocate an IMEI of a subscriber identity module such that, in a network requiring use of a specific IMEI, at least one subscriber identity module among multiple subscriber identity modules may be used dynamically. Thus, in one case, by proceeding, in response to noticing that the service establishment based on a first SIM has failed, with a different IMEI but the same SIM for performing the service establishment procedure, the electronic device can efficiently adapt to different network requirements because the electronic device can establish a service based on a same SIM by dynamically switching the IMEI. For example, when networks requirements change, the electronic device can dynamically adapt, as the electronic device is configured to identify a second IMEI in response to a service establishment having failed and can continue with the same SIM. Hence, the electronic device can efficiently process multiple SIMs via the related IMEIs and can successfully complete service establishment.

According to an embodiment, an electronic device including multiple subscriber identity modules may dynamically swap (or allocate) IMEIs of subscriber identity modules, based on an IMEI allocation policy, thereby providing communication based on a subscriber identity module needed by the user of the electronic device.

According to an embodiment, an electronic device including multiple subscriber identity modules may store and manage information of IMEIs dynamically allocated to respective subscriber identity modules, thereby maintaining usability of the IMEI allocated to a subscriber identity module even during rebooting of the electronic device.

Advantageous effects obtainable from various embodiments of the disclosure are not limited to the above-mentioned advantageous effects, and other advantageous effects not mentioned herein will be clearly understood from the following description by those skilled in the art to which various embodiments of the disclosure pertain.

### [Brief Description of Drawings]

FIG. 1 is a block diagram of an electronic device inside a network environment according to an embodiment.
FIG. 2 is a block diagram of an electronic device for supporting 4G network communication and 5G network communication according to an embodiment.
FIG. 3 illustrates a protocol stack structure of a network for 4G communication and/or 5G communication according to an embodiment.
FIG. 4 is a block diagram of an electronic device configured to support multiple SIMs according to an embodiment.
FIG. 5 is a block diagram illustrating a program for IMEI allocation according to an embodiment.
FIG. 6 is a flowchart for allocating an IMEI in an electronic device according to an embodiment.
FIG. 7 illustrates an example of a service establishment procedure related to a first type of SIM in an electronic device according to an embodiment.
FIG. 8 illustrates an example of a service establishment procedure related to a second type of SIM in an electronic device according to an embodiment.
FIG. 9 is a flowchart for reallocating an IMEI to a SIM in an electronic device according to an embodiment.
FIG. 10A illustrates a screen configuration in a state in which one SIM is activated in an electronic device according to an embodiment.
FIG. 10B illustrates a screen configuration in a state in which a SIM is added to an electronic device according to an embodiment.
FIG. 10C illustrates a screen configuration when performing a service establishment procedure related to a SIM in an electronic device according to an embodiment.
FIG. 10D illustrates a screen configuration in a state in which multiple SIMs are activated in an electronic device according to an embodiment.
FIG. 10E illustrates a screen configuration related to selection of the IMEI of a SIM in an electronic device according to an embodiment.
FIG. 10F illustrates a screen configuration related to selection of the IMEI of a SIM in an electronic device according to an embodiment.
FIG. 10G illustrates a screen configuration related to selection of the IMEI of a SIM in an electronic device according to an embodiment.
FIG. 11 illustrates an example of reallocating an IMEI to a first type of SIM in an electronic device according to an embodiment.
FIG. 12 illustrates an example of reallocating an IMEI to a first type of SIM in an electronic device according to an embodiment.
FIG. 13 is a flowchart for allocating an IMEI to a SIM, based on an IMEI allocation policy, in an electronic device according to an embodiment.
FIG. 14 is a flowchart for allocating an IMEI to a SIM, based on an IMEI allocation policy, in an electronic device according to an embodiment.
FIG. 15 is a flowchart for allocating an IMEI related to an emergency call in an electronic device according to an embodiment.

### [Mode for the Invention]

Hereinafter, various embodiments are described in detail with reference to the accompanying drawings. The person skilled in the art will understand that the features described above and/or below may be combined in any way deemed useful. The drawings of the present disclosure show examples/embodiments of the invention, which will be described in detail hereinafter. It is to be understood that one or more of elements / components shown and/or described in one or more of these examples/embodiments and not in others may be used in those others too unless mechanical or other limitations prevent such an implementation. Moreover, describing features of different examples/embodiments in a single passage does not automatically mean that those features are inextricably linked. They may be applied separately from one another.

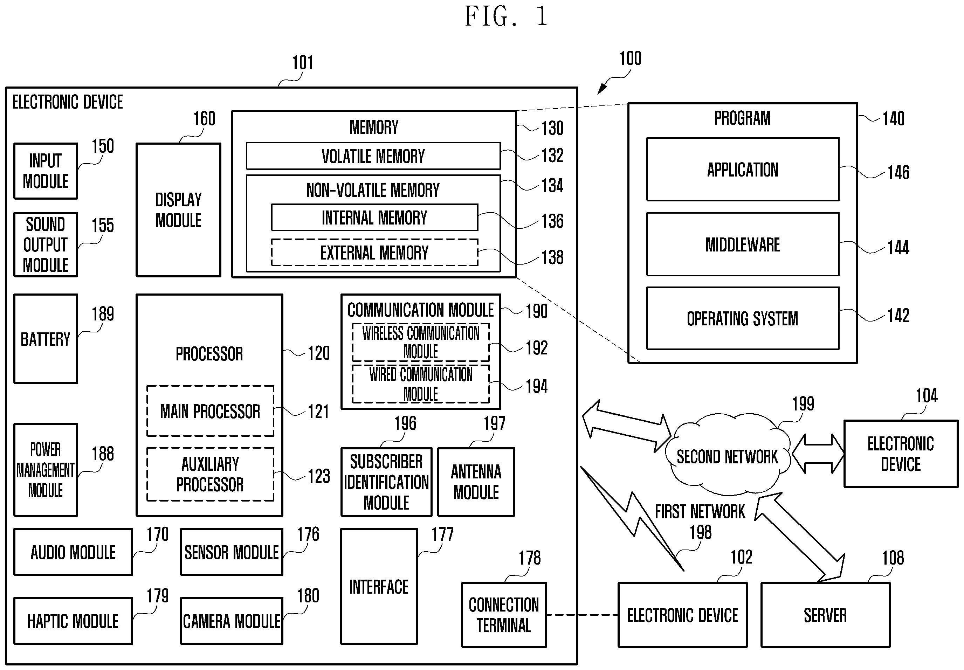

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to one embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include patch array antennas and/or dipole array antennas.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

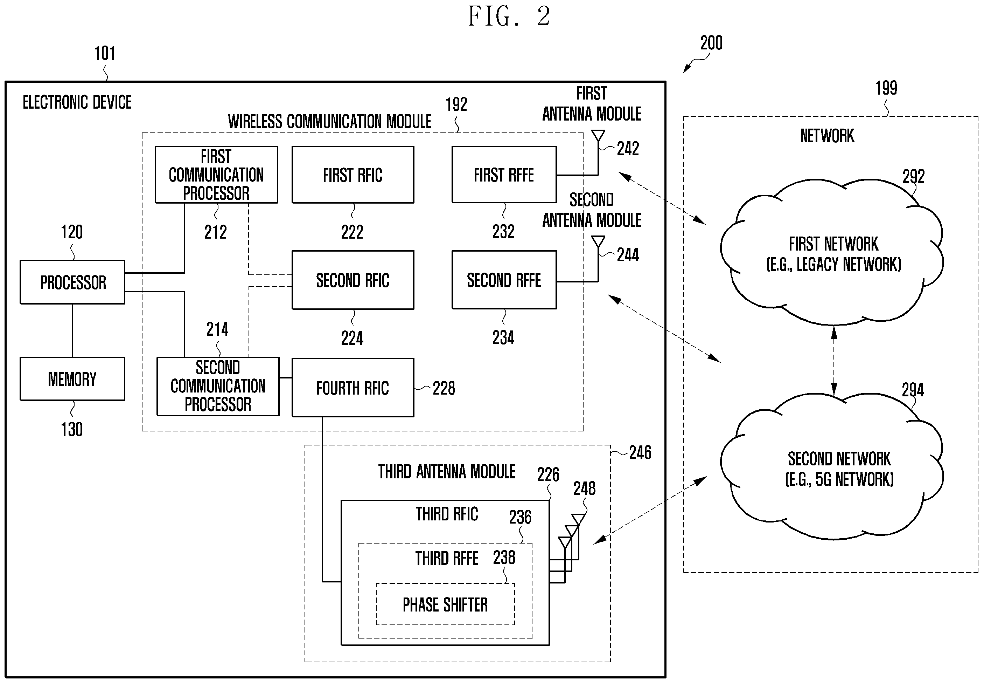

FIG. 2 is a block diagram 200 illustrating an example electronic device 101 supporting 4G (or legacy) network communication and 5G network communication according to various embodiments.

Referring to FIG. 2, according to various embodiments, the electronic device 101 may include a first communication processor (e.g., including processing circuitry) 212, a second communication processor (e.g., including processing circuitry) 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may include the processor 120 and the memory 130. The network 199 may include a first network 292 and a second network 294. According to an embodiment, the electronic device 101 may further include at least one component among the components illustrated in FIG. 1, and the network 199 may further include at least one other network. According to an embodiment, the first communication processor 212, the second communication processor 214, the first RFIC 222, the second RFIC 224, the fourth RFIC 228, the first RFFE 232, and the second RFFE 234 may be at least a part of the wireless communication module 192. According to an embodiment, the fourth RFIC 228 may be omitted, or may be included as a part of the third RFIC 226.

The first communication processor 212 may establish a communication channel of a band to be used for wireless communication with the first network 292, and may support legacy network communication via the established communication channel. According to an embodiment, the first network 292 may be a legacy network including second generation (2G), third generation (3G), fourth generation (4G), or long-term evolution (LTE) network. The second communication processor 214 may establish a communication channel corresponding to a designated band (e.g., approximately 6 GHz to 60 GHz) among bands to be used for wireless communication with the second network 294, and may support 5G network communication via the established communication channel. According to an embodiment, the second network 294 may be a 5G network (e.g., new radio (NR)) defined in 3GPP. In addition, according to an embodiment, the first communication processor 212 or the second communication processor 214 may establish a communication channel corresponding to another designated band (e.g., approximately 6 GHz or less) among bands to be used for wireless communication with the second network 294, and may support 5G network communication via the established communication channel. According to an embodiment, the first communication processor 212 and the second communication processor 214 may be implemented in a single chip or a single package. According to an embodiment, the first communication processor 212 or the second communication processor 214 may be implemented in a single chip or a single package, together with the processor 120, the auxiliary processor 123, or the communication module 190.

According to an embodiment, the first communication processor 212 may perform data transmission or reception with the second communication processor 214. For example, data which has been classified to be transmitted via the second network 294 may be changed to be transmitted via the first network 292.

In this instance, the first communication processor 212 may receive transmission data from the second communication processor 214. For example, the first communication processor 212 may perform data transmission or reception with the second communication processor 214 via an inter-processor interface. The inter-processor interface may be implemented as, for example, a universal asynchronous receiver/transmitter (UART) (e.g., a high speed-UART (HS-UART)) or a peripheral component interconnect bus express (PCIe), but the type of interface is not limited thereto. For example, the first communication processor 212 and the second communication processor 214 may exchange control information and packet data information using, for example, a shared memory. For example, the first communication processor 212 may perform transmission or reception of various types of information such as sensing information, information associated with an output strength, and resource block (RB) allocation information, with the second communication processor 214.

Depending on implementation, the first communication processor 212 may not be directly connected to the second communication processor 214. In this instance, the first communication processor 212 may perform data transmission or reception with the second communication processor 214, via the processor 120 (e.g., an application processor). For example, the first communication processor 212 and the second communication processor 214 may perform data transmission or reception via the processor 120 (e.g., an application processor) and a HS-UART interface or a PCIe interface, but the type of interface is not limited. For example, the first communication processor 212 and the second communication processor 214 may exchange control information and packet data information using the processor 120 (e.g., an application processor) and a shared memory. According to an embodiment, the first communication processor 212 and the second communication processor 214 may be implemented in a single chip or a single package. According to various embodiments, the first communication processor 212 or the second communication processor 214 may be implemented in a single chip or a single package, together with the processor 120, the auxiliary processor 123, or the communication module 190.

In the case of transmission, the first RFIC 222 may convert a baseband signal generated by the first communication processor 212 into a radio frequency (RF) signal in the range of approximately 700 MHz to 3 GHz, which is used in the first network 292 (e.g., a legacy network). In the case of reception, an RF signal is obtained from the first network 292 (e.g., a legacy network) via an antenna (e.g., the first antenna module 242), and may be preprocessed via an RFFE (e.g., the first RFFE 232). The first RFIC 222 may convert the preprocessed RF signal into a baseband signal so that the baseband signal is processed by the first communication processor 212.

In the case of transmission, the second RFIC 224 may convert a baseband signal generated by the first communication processor 212 or the second communication processor 214 into an RF signal (hereinafter, a 5G Sub6 RF signal) in an Sub6 band (e.g., approximately 6 GHz or less) used in the second network 294 (e.g., a 5G network). In the case of reception, a 5G Sub6 RF signal may be obtained from the second network 294 (e.g., a 5G network) via an antenna (e.g., the second antenna module 244), and may be preprocessed by an RFFE (e.g., the second RFFE 234). The second RFIC 224 may convert the preprocessed 5G Sub6 RF signal into a baseband signal so that the signal may be processed by a corresponding communication processor among the first communication processor 212 or the second communication processor 214.

The third RFIC 226 may convert a baseband signal generated by the second communication processor 214 into an RF signal (hereinafter, a 5G Above6 RF signal) of a 5G Above6 band (e.g., approximately 6 GHz to 60 GHz) to be used in the second network 294 (e.g., a 5G network). In the case of reception, a 5G Above6 RF signal is obtained from the second network 294 (e.g., a 5G network) via an antenna (e.g., the antenna 248), and may be preprocessed by the third RFFE 236. The third RFIC 226 may convert the preprocessed 5G Above6 RF signal into a baseband signal so that the signal is processed by the second communication processor 214. According to an embodiment, the third RFFE 236 may be implemented as a part of the third RFIC 226.

According to an embodiment, the electronic device 101 may include the fourth RFIC 228, separately from or, as a part of, the third RFIC 226. In this instance, the fourth RFIC 228 may convert a baseband signal produced by the second communication processor 214 into an RF signal (hereinafter, an IF signal) in an intermediate frequency band (e.g., approximately 9 GHz to 11 GHz), and may transfer the IF signal to the third RFIC 226. The third RFIC 226 may convert the IF signal into a 5G Above6 RF signal. In the case of reception, a 5G Above6 RF signal may be received from the second network 294 (e.g., a 5G network) via an antenna (e.g., the antenna 248), and may be converted into an IF signal by the third RFIC 226. The fourth RFIC 228 may convert the IF signal into a baseband signal so that the second communication processor 214 is capable of processing the baseband signal.

According to an embodiment, the first RFIC 222 and the second RFIC 224 may be implemented as at least a part of a single chip or a single package. According to an embodiment, the first RFFE 232 and the second RFFE 234 may be implemented as at least a part of a single chip or single package. According to an embodiment, at least one of the first antenna module 242 or the second antenna module 244 may be omitted or may be combined with another antenna module, to process RF signals of a plurality of corresponding bands.

According to an embodiment, the third RFIC 226 and the antenna 248 may be disposed in the same substrate, and may form a third antenna module 246. For example, the wireless communication module 192 or the processor 120 may be disposed in a first substrate (e.g., a main PCB). In this instance, the third RFIC 226 is disposed in a part (e.g., a lower part) of a second substrate (e.g., a sub PCB) different from the first substrate, and the antenna 248 is disposed in another part (e.g., an upper part), so that the third antenna module 246 may be formed. By disposing the third RFIC 226 and the antenna 248 in the same substrate, the length of a transmission line therebetween may be reduced. For example, this may reduce a loss (e.g., a diminution) of a high-frequency band signal (e.g., approximately 6 GHz to 60 GHz) used for 5G network communication, the loss being caused by a transmission line. Accordingly, the electronic device 101 may improve the quality or speed of communication with the second network 294 (e.g., a 5G network).

According to an embodiment, the antenna 248 may be implemented as an antenna array including a plurality of antenna elements which may be used for beamforming. In this instance, the third RFIC 226, for example, may include a plurality of phase shifters 238 corresponding to a plurality of antenna elements, as a part of the third RFFE 236. In the case of transmission, each of the plurality of phase shifters 238 may shift the phase of a 5G Above6RF signal to be transmitted to the outside of the electronic device 101 (e.g., a base station of a 5G network) via a corresponding antenna element. In the case of reception, each of the plurality of phase shifters 238 may shift the phase of a 5G Above6 RF signal received from the outside via a corresponding antenna element into the same or substantially the same phase. This may enable transmission or reception via beamforming between the electronic device 101 and the outside.

The second network 294 (e.g., a 5G network) may operate independently (e.g., Standalone (SA)) from the first network 292 (e.g., a legacy network), or may operate by being connected thereto (e.g., Non-Standalone (NSA)). For example, in the 5G network, only an access network (e.g., 5G radio access network (RAN) or next generation RAN (NG RAN)) may exist, and a core network (e.g., next generation core (NGC)) may not exist. In this instance, the electronic device 101 may access the access network of the 5G network, and may access an external network (e.g., the Internet) under the control of the core network (e.g., an evolved packed core (EPC)) of the legacy network. Protocol information (e.g., LTE protocol information) for communication with the legacy network or protocol information (e.g., new radio (NR) protocol information) for communication with the 5G network may be stored in the memory 130, and may be accessed by another component (e.g., the processor 120, the first communication processor 212, or the second communication processor 214).

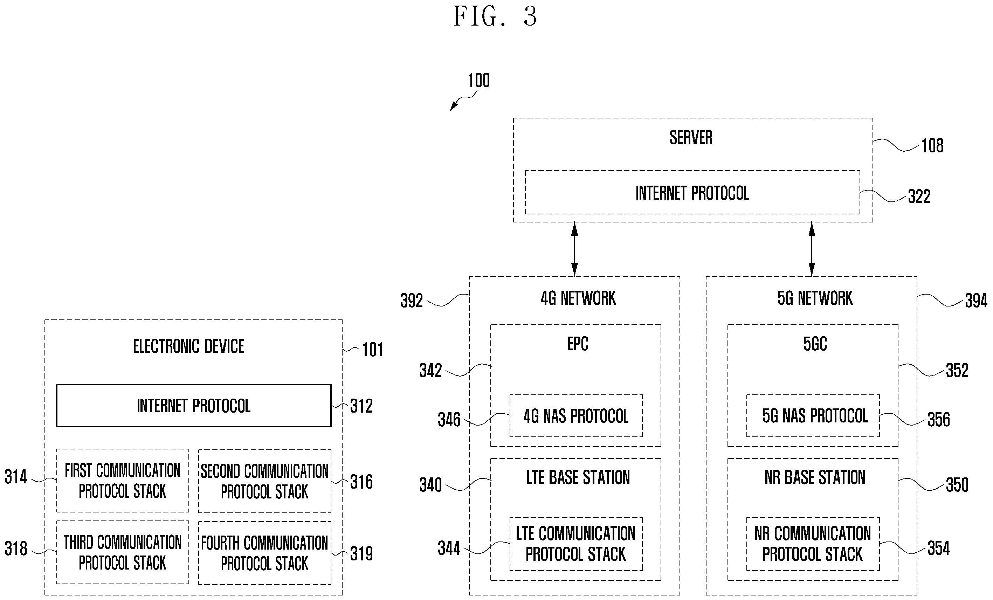

FIG. 3 illustrates a protocol stack structure of a network 100 for 4G communication and/or 5G communication according to an embodiment.

Referring to FIG. 3, according to an embodiment, the network 100 may include an electronic device 101, a 5G network 392, a 5G network 394, and a server 108.

According to an embodiment, the electronic device 101 may include an Internet protocol 312, a first communication protocol stack 314, a second communication protocol stack 316, a third communication protocol stack 318, and a fourth communication protocol stack 319. For example, the electronic device 101 may communicate with the server 108 through the 4G network 392 and/or the 5G network 394.

According to an embodiment, the electronic device 101 may perform Internet communication associated with the server 108 by using the Internet protocol 312 (for example, transmission control protocol (TCP), user datagram protocol (UDP), Internet protocol (IP)). For example, the Internet protocol 312 may be performed in a main processor (for example, the main processor 121 in FIG. 1) included in the electronic device 101.

According to an embodiment, the electronic device 101 may perform wireless communication with the 4G network 392 by using the first communication protocol stack 314 and/or the third communication protocol stack 318. According to an embodiment, the electronic device 101 may perform wireless communication with the 5G network 394 by using the second communication protocol stack 316 and/or the fourth communication protocol stack 319. For example, the first communication protocol stack 314, the second communication protocol stack 316, the third communication protocol stack 318, and the fourth communication protocol stack 319 may be executed in one or more communication processors (for example, the wireless communication module 192 in FIG. 1) included in the electronic device 101.

According to an embodiment, the electronic device 101 may include multiple SIMs (for example, a first SIM and a second SIM). According to an embodiment, the electronic device 101 may communicate with the 4G network 392 and/or the 5G network 394, based on subscriber identity information (for example, international mobile subscriber identity (IMSI)) stored in the multiple SIMs (for example, a first SIM and a second SIM), respectively.

According to an embodiment, the electronic device 101 may perform wireless communication for the first SIM by using the first communication protocol stack 314 and/or the second communication protocol stack 316. According to an embodiment, the first communication protocol stack 314 may include various protocols for wireless communication with the 4G network 392. According to an embodiment, the second communication protocol stack 316 may include various protocols for wireless communication with the 5G network 394. According to an embodiment, when performing communication by using the first SIM, the electronic device 101 may perform wireless communication with the 4G network 392 and/or the 5G network 394 by using the first communication protocol stack 314 and/or the second communication protocol stack 316.

According to an embodiment, the electronic device 101 may perform wireless communication for the second SIM by using the third communication protocol stack 318 and/or the fourth communication protocol stack 319. According to an embodiment, the third communication protocol stack 318 may include various protocols for wireless communication with the 4G network 392. According to an embodiment, the fourth communication protocol stack 319 may include various protocols for wireless communication with the 5G network 394. According to an embodiment, when performing communication by using the second SIM, the electronic device 101 may perform wireless communication with the 4G network 392 and/or the 5G network 394 by using the third communication protocol stack 318 and/or the fourth communication protocol stack 319.

According to an embodiment, the server 108 may include an Internet protocol 322. The server 108 may transmit and/or receive data related to the Internet protocol 322 with the electronic device 101 through the 4G network 392 and/or the 5G network 394. According to an embodiment, the server 108 may include a cloud computing server existing outside the 4G network 392 or the 5G network 394. According to another embodiment, the server 108 may include an edge computing server (or a mobile edge computing (MEC) server) existing inside at least one of the 4G network 392 or the 5G network 394.

According to an embodiment, the 4G network 392 may include a long term evolution (LTE) base station 340 and an evolved packed core (EPC) 342. The LTE base station 340 may include an LTE communication protocol stack 344. The EPC 342 may include a 4G non-access stratum (NAS) protocol 346. The 4G network 392 may perform LTE wireless communication with the electronic device 101 by using the LTE communication protocol stack 344 and the 4G NAS protocol 346.

According to an embodiment, the 5G network 394 may include a new radio (NR) base station 350 and a 5^{th} generation core (5GC) network 352. The NR base station 350 may include an NR communication protocol stack 354. The 5GC 352 may include a 5G NAS protocol 356. The 5G network 394 may perform NR wireless communication with the electronic device 101 by using the NR communication protocol stack 354 and the 5G NAS protocol 356.

According to an embodiment, the first communication protocol stack 314, the second communication protocol stack 316, the third communication protocol stack 318, the fourth communication protocol stack 319, the LTE communication protocol stack 344, and the NR communication protocol stack 354 may include a control plane protocol for transmitting/receiving control messages, and a user plane protocol for transmitting/receiving user data. For example, the control messages may include messages related to at least one of security control, bearer configuration, authentication, registration, or mobility management. For example, the user data may include remaining data other than the control messages.

According to an embodiment, the control plane protocol and the user plane protocol may include physical (PHY), medium access control (MAC), radio link control (RLC), or packet data convergence protocol (PDCP) layers. For example, the PHY layer may channel-code and modulate data received from the upper-level layer (for example, the MAC layer) and may transmit the same to a radio channel, and may demodulate and decode data received through the radio channel and may transfer the same to the upper-level layer. The PHY layer included in the second communication protocol stack 316 and the NR communication protocol stack 354 may further perform an operation related to beam forming. For example, the MAC layer may logically/physically map data to a radio channel through which the same is to be transmitted/received and may perform hybrid automatic repeat request (HARQ) for error correction. For example, the RLC may perform concatenation, segmentation, or reassembly of data and may perform the data's order identification, realignment, or redundancy check. For example, the PDCP layer may perform operations related to ciphering of control data and user data, and data integrity. The second communication protocol stack 316 and the NR communication protocol stack 354 may further include a service data adaptation protocol (SDAP). For example, the SDAP may manage radio bearer allocation based on the quality of service (QoS) of user data.

According to an embodiment, the control plane protocol may include a radio resource control (RRC) layer and a non-access stratum (NAS) layer. For example, the RRC layer may process control data related to radio bearer configuration, paging, or mobility management. For example, the NAS may process control messages related to authentication, registration, and mobility management.

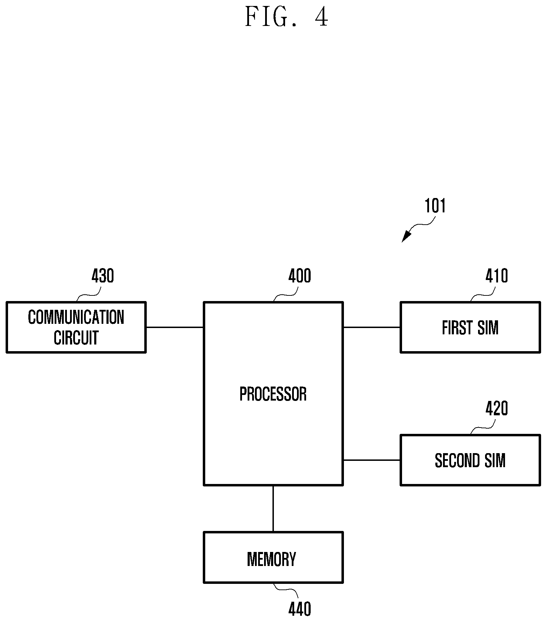

FIG. 4 is a block diagram of an electronic device configured to support multiple SIMs according to an embodiment.

According to an embodiment referring to FIG. 4, the electronic device 101 may include a processor 400, a first subscriber identity module SIM) 410, a second SIM 420, a communication circuit (or communication circuitry) 430, and/or a memory 440. According to an embodiment, the processor 400 may be substantially identical to the processor 120 in FIG. 1 or included in the processor 120. The first SIM 410 and the second SIM 420 may be substantially identical to the SIM 196 in FIG. 1 or included in the SIM 196. The communication circuit 430 may be substantially identical to the wireless communication module 192 in FIG. 1 or included in the wireless communication module 192. The memory 440 may be substantially identical to the memory 130 in FIG. 1 or included in the memory 130. According to an embodiment, the processor 400 may be connected to the first SIM 410, the second SIM 420, the communication circuit 430, and/or the memory 440 operatively, functionally, and/or electrically. According to an embodiment, the electronic device 101 includes the first SIM 410 and the second SIM 420, but is not limited thereto. The electronic device 101 may include three or more SIMs.

According to an embodiment, the SIMs 410 and 420 may store subscriber identity information (for example, international mobile subscriber identity (IMSI)) for access, authentication, accounting, and/or security of a wireless network.

According to an embodiment, the first SIM 410 may store first subscriber identity information (for example, international mobile subscriber identity (IMSI)) to be used by the electronic device 101 to access (or communicate with) a first cellular network and/or a second cellular network operated by a first communication operator (or a first mobile communication provider). As an example, the first cellular network and/or the second cellular network may include at least one of a 2G (generation) network, a 3G network, a 4G network (for example, long term evolution (LTE)), or a 5G network (for example, new ratio (NR)).

According to an embodiment, the second SIM 420 may store second subscriber identity information (for example, IMSI) to be used by the electronic device 101 to access (or communicate with) a third cellular network and/or a fourth cellular network operated by a second communication operator (or a second mobile communication provider). As an example, the third cellular network and/or the fourth cellular network may include at least one of a 2G network, a 3G network, a 4G network (for example, LTE), or a 5G network (for example, NR).

According to an embodiment, the first SIM 410 and/or the second SIM 420 may be configured in a first type in which the same are directly embedded in the electronic device 101 (for example, embedded SIMs (eSIMs) or embedded universal integrated circuit cards (eUICCs)). For example, provided that the first SIM 410 and/or the second SIM 420 are configured in the first type, the electronic device 101 may have information related to the first SIM 410 and/or the second SIM 420 stored through remote SIM provisioning in a security chip disposed on the circuit board of the electronic device 101 during manufacturing processes of the electronic device 101.

According to an embodiment, the first SIM 410 and/or the second SIM 420 may be configured in a second type (for example, integrated circuit (IC) cards) and mounted in slots of the electronic device 101.

According to an embodiment, the processor 400 may control components of the electronic device 101 (for example, the first SIM 410, the second SIM 420, the communication circuit 430, and/or the memory 440). According to an embodiment, the processor 400 may include an application processor (AP) (for example, the main processor 121 in FIG. 1) and/or a communication processor (CP) (for example, the auxiliary processor 123 in FIG. 1 or the communication module 190 in FIG. 1).

According to an embodiment, the processor 400 can allocate an IMEI to a SIM. For example, if the first SIM 410 is activated, the processor 400 may allocate a first IMEI among multiple IMEIs stored in the memory 440 to the first SIM 410. For example, the processor 400 may identify whether there is an IMEI not allocated to another SIM (for example, the second SIM 420) of the electronic device 101 other than the first SIM 410 among the multiple IMEIs stored in the memory 440. If there is a first IMEI not allocated to another SIM (for example, the second SIM 420), the processor 400 may allocate the first IMEI to the first SIM 410. As an example, activation of the first SIM 410 may include a series of operations of detecting (or receiving) an input related to activation of the first SIM 410 of the first type (for example, eSIM). As an example, activation of the first SIM 410 may include a series of operations of acquiring a profile related to the first SIM 410 of the first type (for example, eSIM) from a network. As an example, the profile related to the first SIM 410 may be acquired from the network, based on an eUICC ID (EID) and/or an integrated circuit card ID (ICCID) related to the first SIM 410. As an example, activation of the first SIM 410 may include a series of operations in which the first SIM 410 of the second type is inserted into a designated slog of the electronic device 101.

For example, if there are multiple IMEIs not allocated to another SIM (for example, the second SIM 420), the processor 400 may allocate a first IMEI selected based on the IMEI priority to the first SIM 410. As an example, the relatively lower the value of an IMEI is, the relatively higher priority the IMEI may have.

For example, if there is no IMEI not allocated to another SIM (for example, the second SIM 420), the processor 400 may allocate a first IMEI selected based on an IMEI allocation policy related to the first SIM 410 to the first SIM 410. As an example, the IMEI allocation policy may include information related to a target IMEI based on at least one of the communication operator, the SIM's type, or the service type. As an example, the service type may include at least one of service establishment or an emergency call, as the type of a service, based on the SIM.

According to an embodiment, the processor 400 may store information related to allocation of a first IMEI to the first SIM 410 in the memory 440. For example, the processor 400 may add mapping information of the first SIM 410 and the first IMEI in an IMEI allocation table stored in the memory 440.

According to an embodiment, the processor 400 (for example, the first communication protocol stack 314 and/or the second communication protocol stack 316 in FIG. 3) may control the communication circuit 430 so as to perform a service establishment procedure related to the first SIM 410, based on the first IMEI. For example, the processor 400 may control the communication circuit 430 so as to transmit a registration request (or access request) message including identity information (for example, international mobile subscriber identity (IMSI)) of the first SIM 410 to the network. Upon receiving an IMEI request message from the network through the communication circuit 430, the processor 400 may control the communication circuit 430 so as to transmit information related to the first MEI allocated to the first SIM 410 to the network.

According to an embodiment, upon determining that the first SIM 410 has failed in service establishment based on the first IMEI, the processor 400 reallocate an IMEI to the first SIM 410, based on multiple IMEIs stored in the memory 440. For example, the processor 400 may identify whether there is an IMEI not allocated to SIMs (for example, the first SIM 410 and/or the second SIM 420) included in the electronic device 101 among the multiple IMEIs stored in the memory 440. If there is a second IMEI not allocated to the first SIM 410 and/or the second SIM 420, the processor 400 may allocate (or reallocate) the second IMEI to the first SIM 410. As an example, the second IMEI may include an IMEI different from the first IMEI allocated to the first SIM 410 among the multiple IMEIs stored in the memory 440. As an example, the failure of the first SIM 410 in service establishment based on the first IMEI may be determined based on a message related to service establishment rejection received from the network.

For example, if there are multiple IMEIs not allocated to the first SIM 410 and/or the second SIM 420, the processor 400 may allocate (or reallocate) the second IMEI selected based on the IMEI priority to the first SIM 410.

For example, if there is no IMEI not allocated to the first SIM 410 and/or the second SIM 420, the processor 400 may allocate (or reallocate) the second IMEI selected based on an IMEI allocation policy related to the first SIM 410 to the first SIM 410. As an example, the processor 400 may allocate (or reallocate) the second IMEI which has been allocated to the second SIM 420, based on the IMEI allocation policy related to the first SIM 410, to the first SIM 410. The processor 400 may allocate (or reallocate) the first IMEI which has been allocated to the first SIM 410 to the second SIM 420.

For example, if there is no IMEI allocation policy related to the first SIM 410, the processor 400 may determine that IMEI reallocation to the first SIM 410 has failed. The processor 400 may determine, based on the failed IMEI reallocation to the first SIM 410, that service establishment related to the first SIM 410 has failed (or been limited). The processor 400 may control an output device (not illustrated) of the electronic device 101 so as to output service establishment failure information (or service establishment limitation information) related to the first SIM 410. As an example, the output device may include at least one of a display, an audio output device, a vibrating device, or an indicator.

According to an embodiment, the processor 400 may store information related to allocation of the second IMEI to the first SIM 410 in the memory 440. For example, the processor 400 may update information regarding IMEI allocation to the first SIM 410 to information related to the second IMEI, in the IMEI allocation table stored in the memory 440.

According to an embodiment, the processor 400 (for example, the first communication protocol stack 314 and/or the second communication protocol stack 316 in FIG. 3) may control the communication circuit 430 so as to perform a service establishment procedure related to the first SIM 410, based on the second IMEI. For example, the processor 400 may control the communication circuit 430 so as to transmit a registration request (or access request) message including identity information (for example, IMSI) of the first SIM 410 to the network. Upon receiving an IMEI request message from the network through the communication circuit 430, the processor 400 may control the communication circuit 430 so as to transmit information related to the second IMEI allocated (or reallocated) to the first SIM 410 to the network.

According to an embodiment, the processor 400 (for example, the first communication protocol stack 314 and/or the second communication protocol stack 316 in FIG. 3) may control the communication circuit 430 so as to perform wireless communication based on first subscriber identity information stored in the first SIM 410 if service establishment related to the first SIM 410 has succeeded.

According to an embodiment, upon determining that there is no IMEI to be allocated to a new SIM among the multiple IMEIs stored in the memory 440, the processor 400 may acquire (or allocate) a new IMEI from an external device (for example, the electronic device 102 or 104 and/or the server 108 in FIG. 1).

According to an embodiment, the communication circuit 430 may receive signals from the external device through an antenna (for example, the antenna module 197 in FIG. 1) or transmit signals to the external device. According to an embodiment, the communication circuit 430 may include an RFIC for communication with the external device (for example, the first RFIC 222, the RFIC 224, the third RFIC 236, and/or the fourth RFIC 228 in FIG. 2) and an RFFE ((for example, the first RFFE 232, the RFFE 234, and/or the third RFFE 238 in FIG. 2). As an example, the components of the communication circuit 430 may all be included in the same chip, or some thereof may be included in different chips.

According to an embodiment, the memory 440 may at least temporarily store various pieces of data used by at least one component of the electronic device 101 (for example, the processor 400 or the communication circuit 430). For example, the various pieces of data may include at least one of information related to multiple IMEIs which can be allocated to a SIM in the electronic device 101, or information related to an IMEI allocation table. According to an embodiment, the memory 440 may store various instructions which may be executed through the processor 400.

According to an embodiment, upon determining that service establishment related to the first SIM 410 has succeeded based on the first or second IMEI, the electronic device 101 may store IMEI allocation information of the first SIM 410, based on the IMEI at the timepoint at which the service establishment related to the first SIM 410 is deemed to be successful.

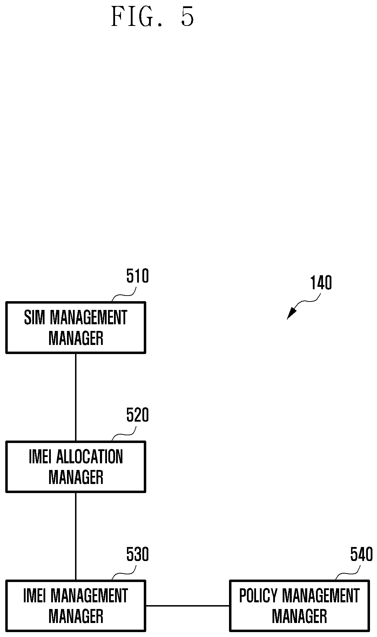

FIG. 5 is a block diagram 500 illustrating a program 140 according to an embodiment.

According to an embodiment referring to FIG. 5, the program 140 may include at least one of a SIM management manager 510, an IMEI allocation manager 520, an IMEI management manager 530, or a policy management manager 540.

According to an embodiment, the SIM management manager 510 may manage an event related to a SIM generated in an electronic device 101 and/or state information of a service related to the SIM. As an example, the event related to a SIM may include at least one of an activation event or a deactivation event related to a first type of SIM, or an insertion event or a removal event related to a second type of SIM. As an example, the service state information may include at least one of service establishment failure information, service establishment success information, emergency call failure information, or emergency call success information.

According to an embodiment, the IMEI allocation manager 520 may perform allocation (or reallocation) of an IMEI to a SIM. For example, the IMEI allocation manager 520 may perform allocation (or reallocation) of an IMEI to a communication protocol stack related to a SIM. According to an embodiment, the IMEI management manager 530 may select (or determine) an IMEI to be allocated (or reallocated) to a SIM. The IMEI management manager 530 may manage information regarding allocation (or reallocation) of an IMEI to a SIM. For example, the IMEI management manager 530 may manage an IMEI allocation table stored in the memory 440. According to an embodiment, the policy management manager 540 may manage an IMEI allocation policy related to a SIM.

According to an embodiment, upon acquiring activation information related to the first SIM 410 from the SIM management manager 510, the IMEI allocation manager 520 may transmit allocation request information (or signal) of the IMEI related to the first SIM 410 to the IMEI management manager 530.

According to an embodiment, the IMEI management manager 530 may allocate the first IMEI among multiple IMEIs stored in the memory 440 to the first SIM 410, based on the allocation request information of the IMEI related to the first SIM 410. For example, the IMEI management manager 530 may identify whether there is an IMEI not allocated to another SIM (for example, the second SIM 420) of the electronic device 101 other than the first SIM 410, among the multiple IMEIs stored in the memory 440. If there is a first IMEI not allocated to another SIM (for example, the second SIM 420), the IMEI management manager 530 may select the first IMEI as the IMEI to be allocated to the first SIM 410.

For example, if there are multiple IMEIs not allocated to another SIM (for example, the second SIM 420), the IMEI management manager 530 may select the first IMEI as the IMEI to be allocated to the first SIM 410, the first IMEI being selected based on IMEI priority.

For example, if there is no IMEI not allocated to another SIM (for example, the second SIM 420), the IMEI management manager 530 may select the first IMEI as the IMEI to be allocated to the first SIM 410, the first IMEI being selected based on an IMEI allocation policy related to the first SIM 410 acquired from the policy management manager 540.

According to an embodiment, the policy management manager 540 may provide the IMEI management manager 530 with the IMEI allocation policy related to the first SIM 410, based on a request of the IMEI management manager 530. As an example, the IMEI allocation policy may include information related to a target IMEI based on at least one of the communication operator, the SIM's type, or the service type.

According to an embodiment, the IMEI management manager 530 may store information related to allocation of the first IMEI to the first SIM 410 in the memory 440. For example, the IMEI management manager 530 may add mapping information of the first SIM 410 and the first IMEI in an IMEI allocation table stored in the memory 440. For example, the IMEI management manager 530 may store information related to allocation of the first IMEI to the first SIM 410 in the memory 440, based on selection of the first IMEI to be allocated to the first SIM 410. For example, the IMEI management manager 530 may store information related to allocation of the first IMEI to the first SIM 410 in the memory 440, based on allocation of the first IMEI by the IMEI allocation manager 520.

According to an embodiment, the IMEI allocation manager 520 may allocate the first IMEI received from the IMEI management manager 530 to a communication protocol stack related to the first SIM 410 (for example, the first communication protocol stack 314 and/or the second communication protocol stack 316 in FIG. 3).

According to an embodiment, the communication protocol stack related to the first SIM 410 (for example, the first communication protocol stack 314 and/or the second communication protocol stack 316 in FIG. 3) may perform a service establishment related to the first SIM 410, based on the first IMEI. As an example, the service establishment procedure may include a series of operations of transmitting a registration request (or access request) message including identity information (for example, IMSI) of the first SIM 410.

According to an embodiment, upon determining that the service establishment related to the first SIM 410 based on the first IMEI from the SIM management manager 510 has failed, the IMEI management manager 520 may transmit information (or a signal) requesting allocation (or reallocation) of the IMEI related to the first SIM 410 to the IMEI management manager 530. As an example, the failure in service establishment related to the first SIM 410 based on the first IMEI may be identified based on a state in which a profile related to the first SIM has failed and/or a message related to service establishment received from the network.

According to an embodiment, the IMEI management manager 530 may reallocate an IMEI to the first SIM 410, based on multiple IMEIs stored in the memory 440, based on information requesting allocation (or reallocation) of the IMEI related to the first SIM 410. For example, the IMEI management manager 530 may identify whether there is an IMEI not allocated to SIMs (for example, the first SIM 410 and/or the second SIM 420) included in the electronic device 101, among the multiple IMEIs stored in the memory 440. If there is a second IMEI not allocated to the first SIM 410 and/or the second SIM 420, the IMEI management manager 530 may select the second IMEI as the IMEI to be allocated (or reallocated) to the first SIM 410.

For example, if there are multiple IMEIs not allocated to the first SIM 410 and/or the second SIM 420, the IMEI management manager 530 may select the second IMEI as the IMEI to be allocated (or reallocated) to the first SIM 410, the second IMEI being selected based on IMEI priority.

For example, if there is no IMEI not allocated to the first SIM 410 and/or the second SIM 420, the IMEI management manager 530 may select the second IMEI as the IMEI to be allocated (or reallocated) to the first SIM 410, the second IMEI being selected based on an IMEI allocation policy acquired from the policy management manager 540. As an example, the IMEI management manager 530 may select the second IMEI as the IMEI to be allocated (or reallocated) to the first SIM 410, the second IMEI being previously allocated to the second SIM 420, based on the IMEI allocation policy. The IMEI management manager 530 may select the first IMEI, which has been allocated to the first SIM 410, as the IMEI to be allocated (or reallocated) to the second SIM 420.

For example, upon determining that there is no IMEI allocation policy related to the first SIM 410 through the policy management manager 540, the IMEI management manager 530 may determine that IMEI reallocation to the first SIM 410 has failed. The IMEI management manager 530 may determine that service establishment related to the first SIM 410 has failed (or been limited), based on the failed IMEI reallocation to the first SIM 410.

According to an embodiment, the IMEI management manager 530 may store information related to allocation of the second IMEI to the first SIM 410 in the memory 440. For example, the IMEI management manager 530 may update information regarding IMEI allocation to the first SIM 410 to information related to the second IMEI, in the IMEI allocation table stored in the memory 440. For example, the IMEI management manager 530 may store information related to allocation of the second IMEI to the first SIM 410 in the memory 440, based on selection of the second IMEI to be allocated (or reallocated) to the first SIM 410. For example, the IMEI management manager 530 may store information related to allocation of the second IMEI to the first SIM 410 in the memory 440, based on allocation (or reallocation) of the second IMEI by the IMEI allocation manager 520.

According to an embodiment, the IMEI allocation manager 520 may allocate (or reallocate) the second IMEI received from the IMEI management manager 530 to a communication protocol stack related to the first SIM 410 (for example, the first communication protocol stack 314 and/or the second communication protocol stack 316 in FIG. 3).

According to an embodiment, the communication protocol stack related to the first SIM 410 (for example, the first communication protocol stack 314 and/or the second communication protocol stack 316 in FIG. 3) may perform a service establishment procedure related to the first SIM 410, based on the second IMEI.

According to an embodiment, if the service establishment related to the first SIM 410 has succeeded, the communication protocol stack related to the first SIM 410 (for example, the first communication protocol stack 314 and/or the second communication protocol stack 316 in FIG. 3) may perform wireless communication based on first subscriber identity information stored in the first SIM 410.

According to an embodiment, an electronic device (for example, the electronic device 101 in FIG. 1, FIG. 2, FIG. 3, or FIG. 4) may include a memory (for example, the memory 130 in FIG. 1 or the memory 440 in FIG. 4) configured to store multiple IMEIs, a first SIM (for example, the SIM 196 in FIG. 1 or the first SIM 410 in FIG. 4), a second SIM (for example, the SIM 196 in FIG. 1 or the second SIM 420 in FIG. 4), a communication circuit (for example, the wireless communication module 192 in FIG. 1 or the communication circuit 430 in FIG. 4), and at least one processor (for example, the processor 120 in FIG. 1 or the processor 400 in FIG. 4). According to an embodiment, the processor may perform a service establishment procedure related to the first SIM, based on a first IMEI among the multiple IMEIs. According to an embodiment, if service establishment related to the first SIM based on the first IMEI has failed, the processor may identify a second IMEI different from the second IMEI among the multiple IMEIs. According to an embodiment, the processor may perform a service establishment procedure related to the first SIM, based on the second IMEI. Thereby, in this example, the electronic device can efficiently adapt to different network requirements because the electronic device can establish a service based on a same SIM by dynamically switching the IMEI. For example, when networks requirements change, the electronic device is able dynamically adapt, as the electronic device is configured to identify a second IMEI in response to a service establishment having failed and can continue with the same SIM. Hence, the electronic device can efficiently process multiple SIMs via the related IMEIs and can successfully complete service establishment.

According to an embodiment, if service establishment related to the first SIM has failed, the at least one processor may allocate a second IMEI not allocated to the first SIM and the second SIM, among the multiple IMEIs, to the first SIM, and may perform a service establishment procedure related to the first SIM, based on the second IMEI.

According to an embodiment, if service establishment related to the first SIM has failed, the at least one processor may identify whether there is an IMEI not allocated to the first SIM and the second SIM, among the multiple IMEIs. If there is no IMEI not allocated to the first SIM and the second SIM, the at least one processor may allocate a second IMEI among the multiple IMEIs to the first SIM, based on an IMEI allocation policy related to the first SIM, and may perform a service establishment procedure related to the first SIM, based on the second IMEI.

According to an embodiment, if the second IMEI has been allocated to the second SIM, the at least one processor may allocate the first IMEI which has been allocated to the first SIM to the second SIM, based on allocation of the second IMEI to the first SIM, and may perform a service establishment procedure related to the second SIM, based on the first IMEI.

According to an embodiment, if there is no IMEI not allocated to the first SIM and the second SIM, the at least one processor may identify whether there is an IMEI allocation policy related to the first SIM and, if there is no IMEI allocation policy related to the first SIM, may determine that service establishment related to the first SIM has failed.

According to an embodiment, the IMEI allocation policy related to the first SIM may include information related to at least one of the type of the first SIM, the communication operator related to the first SIM, the service type related to the first SIM, the target IMEI, or the manner of switching to the target IMEI.

According to an embodiment, the at least one processor may perform a procedure of subscription to the communication operator related to the first SIM, based on the first IMEI. If subscription to the communication operator has succeeded, the at least one processor may acquire a profile related to the first SIM and may perform a service establishment procedure related to the first SIM, based on acquisition of the profile.

According to an embodiment, if subscription to the communication operator fails, or if service establishment related to the first SIM fails, the at least one processor may identify a second IMEI different from the first IMEI among the multiple IMEIs, and may perform a service establishment procedure related to the first SIM, based on the second IMEI.

According to an embodiment, upon allocating the first or second IMEI to the first SIM, the at least one processor may store information related to the first or second IMEI allocated to the first SIM.

According to an embodiment, if service establishment related to the first SIM based on the second IMEI has succeeded, the at least one processor may perform a network registration procedure.

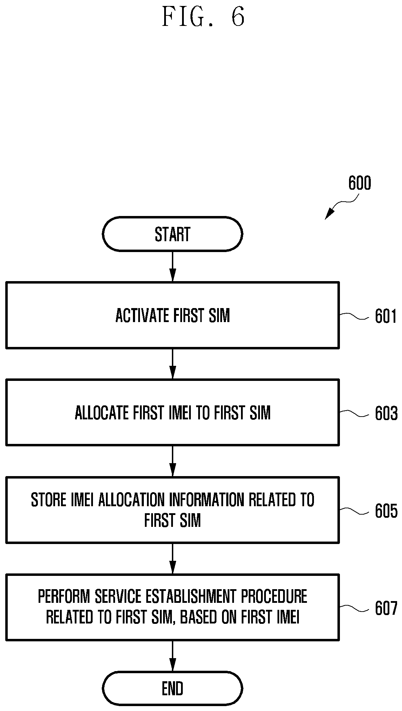

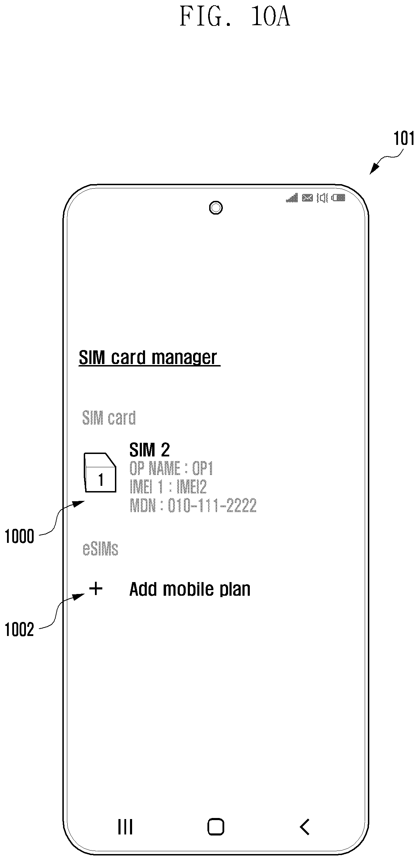

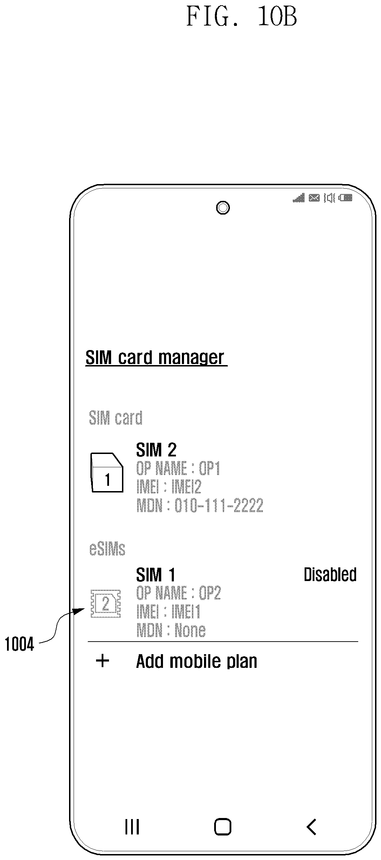

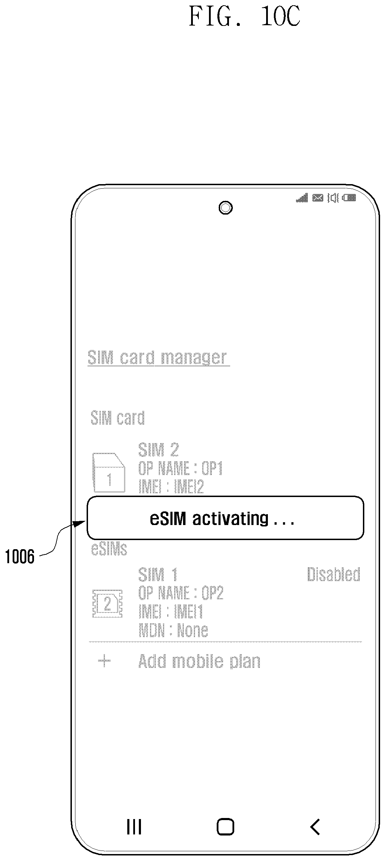

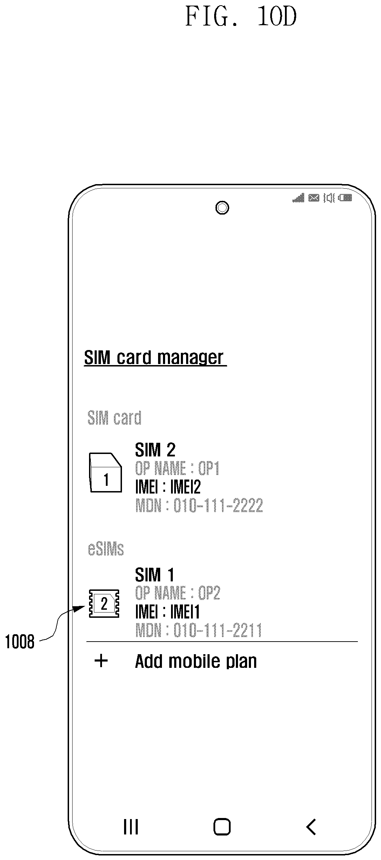

FIG. 6 is a flowchart 600 for allocating an IMEI in an electronic device according to an embodiment. In the following embodiment, respective operations may be performed successively, but are not necessarily performed successively. For example, the order of respective operations may be changed, and at least two operations may be performed in parallel. As an example, the electronic device in FIG. 6 may be the electronic device 101 in FIG. 1, FIG. 2, FIG. 3, or FIG. 4. As an example, at least a part of FIG. 6 may be described with reference to FIG. 10A, FIG. 10B, FIG. 10C, and FIG. 10D. FIG. 10A illustrates a screen configuration in a state in which one SIM is activated in an electronic device according to an embodiment. FIG. 10B illustrates a screen configuration in a state in which a SIM is added to an electronic device according to an embodiment. FIG. 10C illustrates a screen configuration when performing a service establishment procedure related to a SIM in an electronic device according to an embodiment. FIG. 10D illustrates a screen configuration in a state in which multiple SIMs are activated in an electronic device according to an embodiment.

According to an embodiment referring to FIG. 6, FIG. 10A, FIG. 10B, FIG. 10C, and FIG. 10D, an electronic device (for example, the processor 120 in FIG. 1 or the processor 400 in FIG. 4) may activate a first SIM 410 among multiple SIMs (for example, a first SIM 410 and a second SIM 420) included in the electronic device 101 in operation 601. For example, upon sensing an input corresponding to a menu related to SIM management, the processor 400 may control an output device (for example, a display) so as to display information related to the SIM of the electronic device 101, as in FIG. 10A. As an example, the information 1000 related to the SIM may include the second SIM 420 (for example, SIM2) if service establishment related to the second SIM 420 has succeeded. For example, in a state of successful service establishment related to the second SIM 420 as in FIG. 10A, the processor 400 may activate the first SIM 410 (for example, SIM1 in FIG. 10A), based on an input regarding an object 1002 (for example, "add mobile plan") related to addition of the first SIM 410 of a first type (for example, embedded SIM (eSIM)). For example, activation of the first SIM 410 may a series of operations of subscribing to the communication operator and acquiring a profile related to the first SIM 410. As an example, the information related to the SIM may include information 1004 (for example, disable) related to a state in which no service establishment related to the first SIM 410 has been performed or a service establishment failure state, as in FIG. 10B. For example, if the first SIM 410 is configured in a second type (for example, physical SIM (pSIM)), the processor 400 may activate the first SIM 410, based on insertion of the first SIM 410 into a designated slot. As an example, the information 1000 related to the second SIM 420 may include the name of the communication operator to which the second SIM 420 has subscribed (for example, operation (OP) 1), the IMEI (for example, IMEI 2) allocated to the second SIM 420, and/or the telephone number (for example, "010-111-2222") allocated to the second SIM 420. As an example, the telephone number allocated to the second SIM 420 may include a mobile directory number (MDN) or a mobile station ISDN number definition (MSISDN).

According to an embodiment, the electronic device (for example, the processor 120 or 400) may allocate the first IMEI among the multiple IMEIs stored in the electronic device 101 to the first SIM 410 in operation 603. For example, the processor 400 may identify whether there is an IMEI not allocated to another SIM (for example, the second SIM 420) of the electronic device 101 other than the first SIM 410 among the multiple IMEIs stored in the memory 440.

For example, if there is a first IMEI not allocated to another SIM (for example, the second SIM 420), the processor 400 may allocate the first IMEI to the first SIM 410. For example, if there are multiple IMEIs not allocated to another SIM (for example, the second SIM 420), the processor 400 may allocate a first IMEI selected based on the IMEI priority to the first SIM 410. As an example, the relatively lower the value of an IMEI is, the relatively higher priority the IMEI may include.

For example, if there is not IMEI not allocated to another SIM (for example, the second SIM 420), the processor 400 may allocate the first IMEI selected based on an IMEI allocation policy related to the first SIM 410 to the first SIM 410. As an example, the IMEI allocation policy may include information related to a target IMEI based on at least one of the communication operator, the SIM's type, or the service type. As an example, the service type may include at least one of service establishment or an emergency call, as the type of a service, based on the SIM.

According to an embodiment, the electronic device (for example, the processor 120 or 400) may store IMEI allocation information related to the first SIM 410 in operation 605. For example, the processor 400 may store information related to allocation of the first IMEI to the first SIM 410 in the memory 440. As an example, the information related to allocation of the first IMEI to the first SIM 410 may be added to an IMEI allocation table configured as in Table 1 below:

**[Table 1]**

| ICCID | IMEI | SIM type |
|---|---|---|
| ICCID2 | IMEI2 | pSIM |
| ICCID3 | IMEI2 | eSIM |
| ICCID4 | IMEI1 | eSIM |
| **ICCID1** | **IMEI1** | **eSIM** |

As an example, identify information of the first SIM 410 (for example, integrated circuit card ID (ICCID) 1)) and information related to the first IMEI (for example, IMEI 1) allocated to the first SIM 410 may be added to the IMEI allocation table. As an example, information related to the type of the first SIM 410 (for example, eSIM) may be added to the IMEI allocation table.

According to an embodiment, the electronic device (for example, the processor 120 or 400) may perform a service establishment procedure related to the first SIM 410, based on the first IMEI, in operation 607. For example, the processor 400 may control the communication circuit 430 so as to transmit a registration request (or access request) message including identity information (for example, IMSI) of the first SIM 410 to the network. Upon receiving an IMEI request message from the network through the communication circuit 430, the processor 400 may control the communication circuit 430 so as to transmit information related to the first MEI allocated (or reallocated) to the first SIM 410 to the network.

According to an embodiment, when currently performing a service establishment procedure related to the first SIM 410 based on the first IMEI, the electronic device 101 may output information 1006 (for example, "eSIM activating") related to performing the service establishment procedure related to the first SIM 410, as in FIG. 10C. As an example, the information 1006 related to performing the service establishment procedure related to the first SIM 410 may be displayed on the display of the electronic device 101.

According to an embodiment, upon succeeding in service establishment related to the first SIM 410, the electronic device 101 may output service establishment information related to the first SIM 410. For example, the electronic device 101 may output (or display) service establishment information 1008 related to the first SIM 410 on at least a part of information related to the SIM displayed on the display, as in FIG. 10D. As an example, the establishment information 1008 related to the first SIM 410 may include the name of the communication operator to which the first SIM 410 has subscribed (for example, OP2), the IMEI (for example, IMEI 1) allocated to the first SIM 410, and/or the telephone number (for example, 010-111-2211) allocated to the first SIM 410.

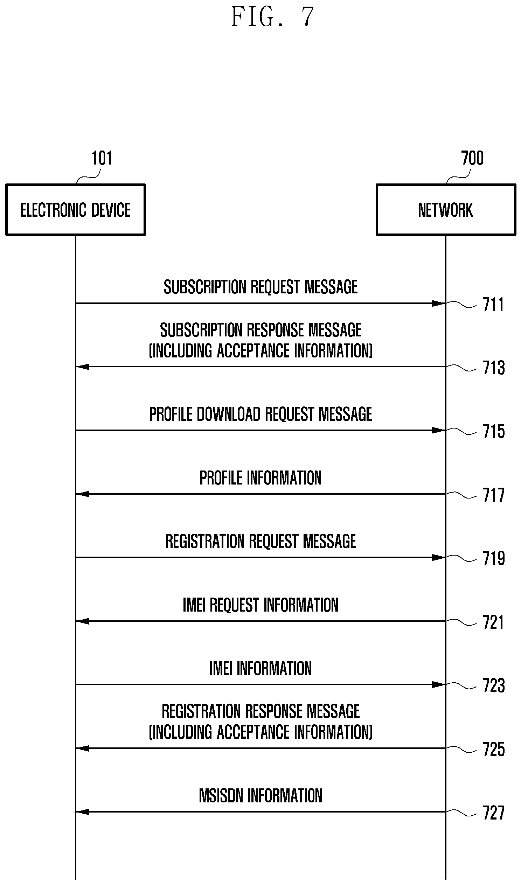

FIG. 7 illustrates an example of a service establishment procedure related to a first type of SIM in an electronic device according to an embodiment. As an example, the first type of SIM may include an embedded SIM (eSIM) or an embedded universal integrated circuit card (eUICC) directly embedded in the electronic device 101.

According to an embodiment referring to FIG. 7, if a first SIM 410 is activated, the electronic device 101 may allocate a first IMEI among multiple IMEIs to the first SIM 410. The electronic device 101 (for example, an application processor) may transmit a subscription request message including the first IMEI to a network 700 (operation 711). As an example, the subscription request message may further include an eUICC ID (EID) related to the first SIM 410. As an example, the network 700 may include at least one network element (for example, eNB or gNB) supporting wireless communication of the electronic device 101.

According to an embodiment, the network 700 may determine whether to accept or reject subscription of the electronic device 101 to the network 700 (for example, communication operator network), based on the first IMEI included in the subscription request message received from the electronic device 101. For example, when accepting subscription of the electronic device 101, the network 700 may transmit a subscription response message including acceptance information to the electronic device 101 (operation 713). For example, when rejecting subscription of the electronic device 101, the network 700 may transmit a subscription response message including rejection information to the electronic device 101.

According to an embodiment, the electronic device 101 (for example, an application processor) may confirm subscription to the network 700 if a subscription response message received from the network 700 includes acceptance information. Based on confirming subscription to the network 700, the electronic device 101 (for example, an application processor) may transmit a profile download request message related to the first SIM 410 of the first type to the network (operation 715). As an example, the profile download request message may include an EID and an ICCID related to the first SIM 410.

According to an embodiment, the network 700 may transmit profile information related to the first SIM 410 to the electronic device 101, based on a profile download request message received from the electronic device 101 (operation 717). As an example, the profile information related to the first SIM 410 may be acquired based on an EID and/or an ICCID included in the profile download request message.

According to an embodiment, upon acquiring profile information related to the first SIM 410 from the network 700, the electronic device 101 (for example, a communication processor) may perform service establishment related to the first SIM 410. For example, the electronic device 101 may transmit a registration request (or access request) (for example, attach request) message including identity information (for example, IMSI) of the first SIM 410 to the network 700 (operation 719).

According to an embodiment, upon receiving a registration request (or access request) message including identity information (for example, IMSI) of the first SIM 410 from the electronic device 101, the network 700 may determine whether service establishment related to the electronic device 101 is necessary. For example, if there is no telephone number (for example, MSISDN) corresponding to identity information of the first SIM 410, the network 700 may determine that service establishment related to the electronic device 101 is necessary. For example, the network 700 may transmit an IMEI request message to the electronic device 101, based on determining that service establishment related to the electronic device 101 is necessary (operation 721). As an example, the IMEI request message may include a security mode command.

According to an embodiment, the electronic device 101 (for example, a communication processor) may transmit information related to the first IMEI allocated to the first SIM 410, based on the IMEI request message received from the network 700 (operation 723). As an example, the information related to the first IMEI allocated to the first SIM 410 may be included in a security mode completed message and transmitted to the network 700.

According to an embodiment, the network 700 may determine whether to accept or reject service establishment related to the first SIM 410 by the electronic device 101, based on the first IMEI received from the electronic device 101. For example, when accepting service establishment related to the first SIM 410 by the electronic device 101, the network 700 may transmit a registration response (for example, attach accept) message including acceptance information to the electronic device 101 (operation 725). For example, when rejecting service establishment related to the first SIM 410 by the electronic device 101, the network 700 may transmit a registration response (for example, attach reject) message including rejection information to the electronic device 101.

According to an embodiment, after accepting service establishment related to the first SIM 410 by the electronic device 101, the network 700 may transmit information related to the MSISDN related to the first SIM 410 to the electronic device 101 (operation 727).

According to an embodiment, the electronic device 101 (for example, a communication processor) may determine that service establishment related to the first SIM 410 has succeeded, based on a registration response message including acceptance information received from the network 700. The electronic device 101 (for example, a communication processor) may perform a procedure of registration to the network 700, based on determining that service establishment related to the first SIM 410 has succeeded.

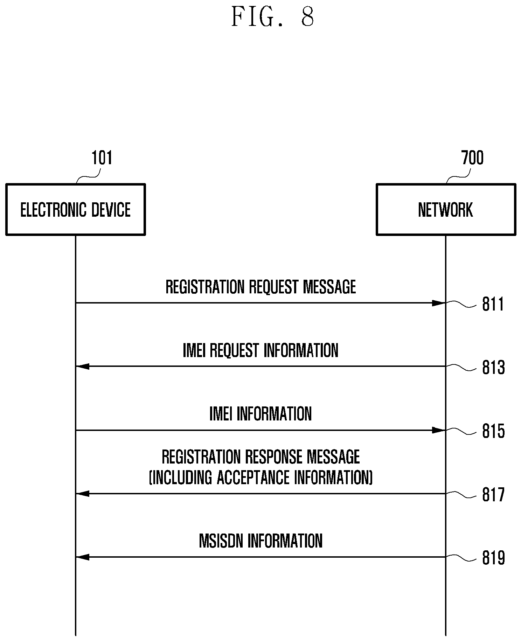

FIG. 8 illustrates an example of a service establishment procedure related to a second type of SIM in an electronic device according to an embodiment. As an example, the second type of SIM may include a pSIM inserted into a designated slot of the electronic device 101.

According to an embodiment referring to FIG. 8, if a first SIM 410 is activated, the electronic device 101 may allocate a first IMEI among multiple IMEIs to the first SIM 410. As an example, activation of the first SIM 410 may include a series of operations of detecting insertion of the first SIM 410 into a designated slot of the electronic device 101.

According to an embodiment, the electronic device 101 (for example, a communication processor) may perform service establishment related to the first SIM 410. For example, the electronic device 101 may transmit a registration request (or access request) (for example, attach request) message including identity information (for example, IMSI) of the first SIM 410 to a network 700 (operation 811).

According to an embodiment, upon receiving a registration request (or access request) message including identity information (for example, IMSI) of the first SIM 410 from the electronic device 101, the network 700 may determine whether service establishment related to the electronic device 101 is necessary. For example, if there is no telephone number (for example, MSISDN) corresponding to identity information of the first SIM 410, the network 700 may determine that service establishment related to the electronic device 101 is necessary. For example, the network 700 may transmit an IMEI request message to the electronic device 101, based on determining that service establishment related to the electronic device 101 is necessary (operation 813). As an example, the IMEI request message may be included in a security mode command.

According to an embodiment, the electronic device 101 (for example, a communication processor) may transmit information related to the first IMEI allocated to the first SIM 410, based on the IMEI request message received from the network 700 (operation 815). As an example, the information related to the first IMEI allocated to the first SIM 410 may be included in a security mode completed message and transmitted to the network 700.

According to an embodiment, the network 700 may determine whether to accept or reject service establishment related to the first SIM 410 by the electronic device 101, based on the first IMEI received from the electronic device 101. For example, when accepting service establishment related to the first SIM 410 by the electronic device 101, the network 700 may transmit a registration response (for example, attach accept) message including acceptance information to the electronic device 101 (operation 817).

According to an embodiment, after accepting service establishment related to the first SIM 410 by the electronic device 101, the network 700 may transmit information related to the MSISDN allocated to the first SIM 410 to the electronic device 101 (operation 819).

According to an embodiment, the electronic device 101 (for example, a communication processor) may determine that service establishment related to the first SIM 410 has succeeded, based on a registration response message including acceptance information received from the network 700.

According to an embodiment, the electronic device 101 (for example, a communication processor) may perform a procedure of registration to the network 700, based on determining that service establishment related to the first SIM 410 has succeeded.

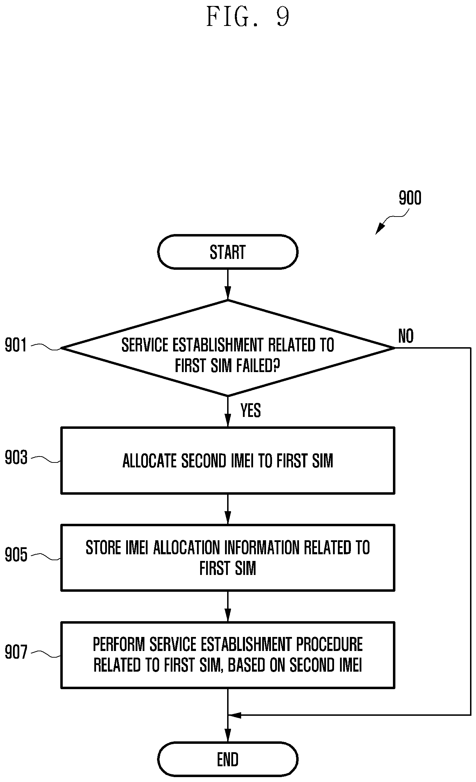

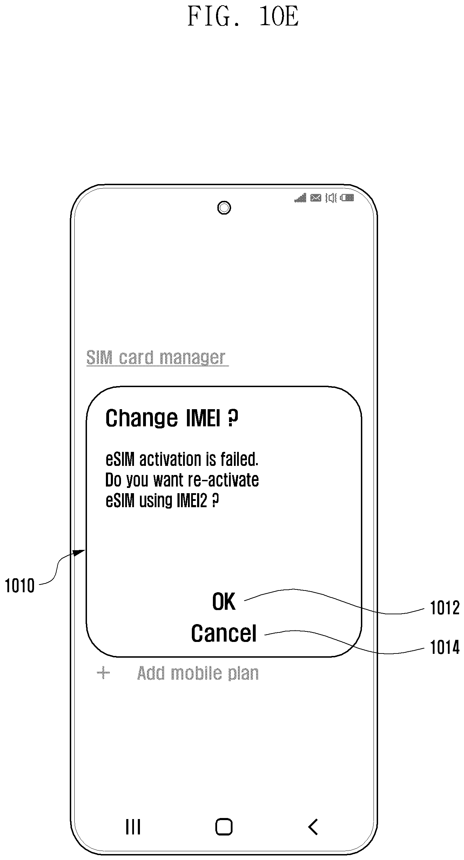

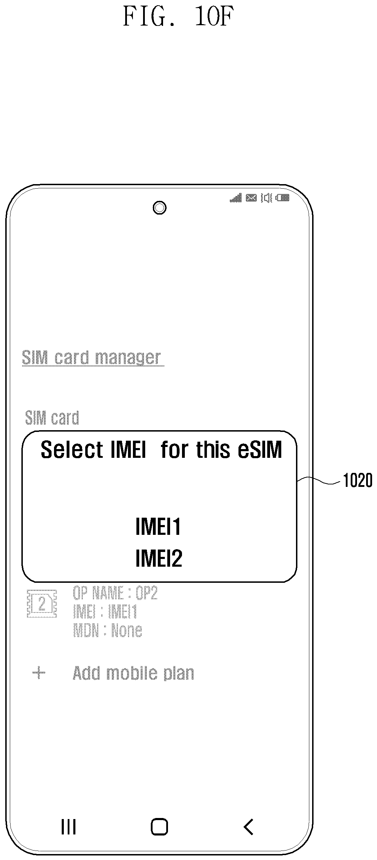

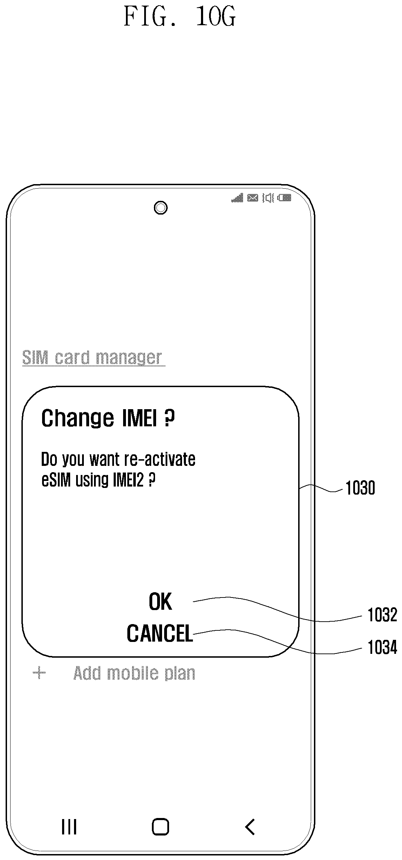

FIG. 9 is a flowchart 900 for reallocating an IMEI to a SIM in an electronic device according to an embodiment. In the following embodiment, respective operations may be performed successively, but are not necessarily performed successively. For example, the order of respective operations may be changed, and at least two operations may be performed in parallel. As an example, the electronic device in FIG. 9 may be the electronic device 101 in FIG. 1, FIG. 2, FIG. 3, or FIG. 4. As an example, at least a part of FIG. 9 may be described with reference to FIG. 10E, FIG. 10F, and FIG. 10G. FIG. 10E illustrates a screen configuration related to selection of the IMEI of a SIM in an electronic device according to an embodiment. FIG. 10F illustrates a screen configuration related to selection of the IMEI of a SIM in an electronic device according to an embodiment. FIG. 10G illustrates a screen configuration related to selection of the IMEI of a SIM in an electronic device according to an embodiment.

According to an embodiment referring to FIG. 9, FIG. 10E, FIG. 10F, and FIG. 10G, when performing service establishment related to a first SIM 410 based on a first IMEI (for example, operation 607 in FIG. 6), the electronic device (for example, the processor 120 in FIG. 1 or the processor 400 in FIG. 4) may identify whether service establishment related to the first SIM 410 has failed, in operation 901. For example, upon receiving a registration response (for example, attach reject) message including rejection information from the network 700, the processor 400 may determine that service establishment related to the first SIM 410 has failed. For example, upon receiving a registration response (for example, attach accept) message including acceptance information from the network 700, the processor 400 may determine that service establishment related to the first SIM 410 has succeeded.

According to an embodiment, upon determining that service establishment related to the first SIM 410 has succeeded (for example, "No" in operation 901), the electronic device (for example, the processor 120 or 400) may end an embodiment for reallocating an IMEI to the first SIM 410. For example, upon determining that service establishment related to the first SIM 410 has succeeded, the processor 400 may control the communication circuit 430 so as to perform a procedure of registration to the network 700.

According to an embodiment, upon determining that service establishment related to the first SIM 410 has failed (for example, "Yes" in operation 901), the electronic device (for example, the processor 120 or 400) may allocate (or reallocate) a second IMEI different from the first IMEI, among multiple IMEIs stored in the electronic device 101, in operation 903. For example, the processor 400 may identify whether there is an IMEI not allocated to SIMs (for example, the first SIM 410 and/or the second SIM 420) included in the electronic device 101, among the multiple IMEIs stored in the memory 440.

For example, if there is a second IMEI not allocated to the first SIM 410 and/or the second SIM 420, the processor 400 may allocate (or reallocate) the second IMEI to the first SIM 410. For example, if there are multiple IMEIs not allocated to the first SIM 410 and/or the second SIM 420, the processor 400 may allocate the second IMEI selected based on IMEI priority to the first SIM 410. As an example, the relatively lower the value of an IMEI is, the relatively higher priority the IMEI may include.

For example, if there is no IMEI not allocated to the first SIM 410 and/or the second SIM 420, the processor 400 may allocate the second IMEI selected based on an IMEI allocation policy related to the first SIM 410 to the first SIM 410. As an example, the processor 400 may allocate (or reallocate) the second IMEI which has been allocated to the second SIM 420, based on the IMEI allocation policy related to the first SIM 410, to the first SIM 410. The processor 400 may allocate (or reallocate) the first IMEI which has been allocated to the first SIM 410 to the second SIM 420.

For example, if the second IMEI which has been allocated to the second SIM 420 based on an IMEI allocation policy related to the first SIM 410 is selected as the IMEI to be allocated (or reallocated) to the first SIM 410, the processor 400 may output information 1010 related to IMEI swap (or switch) as in FIG. 10E. For example, upon detecting (or receiving) an input related to acceptance (for example, "OK") 1011 in the information 1010 related to IMEI swap, the processor 400 may allocate (or reallocate) the second IMEI which has been allocated to the second SIM 420 to the first SIM 410. The processor 400 may allocate (or reallocate) the first IMEI which has been allocated to the first SIM 410 to the second SIM 420. For example, upon detecting (or receiving) an input related to rejection (for example, "Cancel") 1012 in the information 1010 related to IMEI swap, the processor 400 may determine that IMEI reallocation to the first SIM 410 has failed.

For example, if service establishment related to the first SIM 410 has failed, the processor 400 may output information 1020 related to multiple IMEIs stored in the electronic device 101 (for example, the memory 440), as in FIG. 10F. As an example, the multiple IMEIs may include an IMEI allocated to a SIM and an IMEI allocated to no SIM. For example, if the second IMEI (for example, IMEI2) is selected based on a user input as the IMEI to be allocated (or reallocated) to the first SIM 410, the processor 400 may output information 1030 related to IMEI reallocation, as in FIG. 10G. For example, upon detecting (or receiving) an input related to acceptance (for example, "OK") 1031 in the information 1030 related to IMEI reallocation, the processor 400 may allocate (or reallocate) the second IMEI to the first SIM 410. As an example, if the second IMEI has been allocated to the second SIM 420, the processor 400 may allocate (or reallocate) the first IMEI which has been allocated to the first SIM 410 to the second SIM 420. For example, upon detecting (or receiving) an input related to rejection (for example, "Cancel") 1034 in the information 1030 related to IMEI reallocation, the processor 400 may determine that IMEI reallocation to the first SIM 410 has failed.

According to an embodiment, the electronic device (for example, the processor 120 or 400) may store IMEI allocation information (or reallocation information) related to the first SIM 410 in operation 905. For example, the processor 400 may store information related to allocation of the second IMEI to the first SIM 410 in the memory 440. As an example, the processor 400 may update IMEI allocation information regarding the first SIM 410 to information related to the second IMEI in the IMEI allocation table stored in the memory 440, as in Table 2 below:

**[Table 2]**

| ICCID | IMEI | SIM type |
|---|---|---|
| ICCID2 | IMEI2 | pSIM |
| ICCID3 | IMEI2 | eSIM |
| ICCID4 | IMEI1 | eSIM |
| **ICCID1** | **IMEI2** | **eSIM** |

As an example, identify information of the first SIM 410 (for example, ICCID 1) and information related to the second IMEI allocated (or reallocated) to the first SIM 410 may be added to the IMEI allocation table.

According to an embodiment, the electronic device (for example, the processor 120 or 400) may perform a service establishment procedure related to the first SIM 410, based on the second IMEI, in operation 907. For example, the processor 400 may control the communication circuit 430 so as to again perform the service establishment procedure based on the second IMEI.

According to an embodiment, when currently performing a service establishment procedure related to the first SIM 410 based on the second IMEI which has been reallocated due to failed service establishment related to the first SIM 410, the electronic device 101 may output information 1006 related to performing the service establishment procedure related to the first SIM 410, as in FIG. 10C. As an example, the information 1006 related to performing the service establishment procedure related to the first SIM 410 may be displayed on the display of the electronic device 101 while operations 901 to 907 in FIG. 9 are performed.

According to an embodiment, if subscription to the communication operator related to the first SIM 410 based on the first IMEI has failed, the electronic device 101 may reallocate an IMEI to the first SIM 410. If the second IMEI is reallocated, the electronic device 101 may again perform the procedure of subscription to the communication operator related to the first SIM 410, based on the second IMEI.

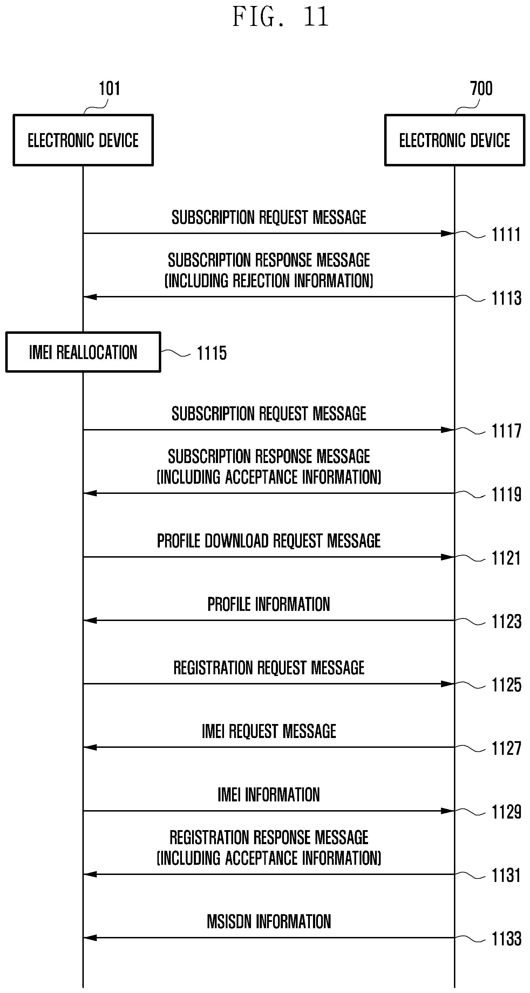

FIG. 11 illustrates an example of reallocating an IMEI to a first type of SIM in an electronic device according to an embodiment. As an example, the first type of SIM may include an eSIM or eUICC directly embedded in the electronic device 101.

According to an embodiment referring to FIG. 11, if a first SIM 410 is activated, the electronic device 101 may allocate a first IMEI among multiple IMEIs to the first SIM 410. The electronic device 101 (for example, an application processor) may transmit a subscription request message including the first IMEI to a network 700 (operation 1111).

According to an embodiment, the network 700 may determine whether to accept or reject subscription of the electronic device 101 to the network 700 (for example, communication operator network), based on the first IMEI included in the subscription request message received from the electronic device 101. For example, when rejecting subscription of the electronic device 101, the network 700 may transmit a subscription response message including rejection information to the electronic device 101 (operation 1113).

According to an embodiment, the electronic device 101 (for example, an application processor) may determine that subscription to the network 700 has failed, based on a subscription response message including rejection information received from the network 700.

According to an embodiment, the electronic device 101 (for example, an application processor) may reallocate an IMEI to the first SIM 410, based on determining that subscription to the network 700 has failed (operation 1115). For example, the electronic device 101 (for example, an application processor) may identify whether there is an IMEI not allocated to the first SIM 410 and/or the second SIM 420 among the multiple IMEIs stored in the memory 440.

For example, if there is a second IMEI not allocated to the first SIM 410 and/or the second SIM 420, the electronic device 101 (for example, an application processor) may allocate (or reallocate) the second IMEI to the first SIM 410. As an example, if there are multiple IMEIs not allocated to the first SIM 410 and/or the second SIM 420, the electronic device 101 (for example, an application processor) may allocate (or reallocate) the second IMEI selected based on IMEI priority to the first SIM 410.

For example, if there is no IMEI not allocated to the first SIM 410 and/or the second SIM 420, the electronic device 101 (for example, an application processor) may allocate the second IMEI selected based on an IMEI allocation policy related to the first SIM 410 to the first SIM 410. As an example, the second IMEI selected based on the IMEI allocation policy may include the IMEI which has been allocated to the second SIM 420.

According to an embodiment, the electronic device 101 (for example, an application processor) may transmit a subscription request message including the reallocated second IMEI to the network 700 (operation 1117).

According to an embodiment, the network 700 may determine whether to accept or reject subscription of the electronic device 101 to the network 700 (for example, communication operator network), based on the second IMEI included in the subscription request message received from the electronic device 101. For example, when accepting subscription of the electronic device 101, the network 700 may transmit a subscription response message including acceptance information to the electronic device 101 (operation 1119).

According to an embodiment, the electronic device 101 (for example, an application processor) may confirm subscription to the network 700, based on the subscription response message including acceptance information received from the network 700.

According to an embodiment, the electronic device 101 (for example, an application processor) may transmit a profile download request message related to the first SIM 410 of the first type to the network 700, based on confirming subscription to the network 700 (operation 1121).

According to an embodiment, the network 700 may transmit profile information related to the first SIM 410 to the electronic device 101, based on the profile download request message received from the electronic device 101 (operation 1123). As an example, the profile information related to the first SIM 410 may be acquired based on the EID and/or ICCID included in the profile download request message.

According to an embodiment, upon acquiring profile information related to the first SIM 410 from the network 700, the electronic device 101 (for example, a communication processor) may perform service establishment related to the first SIM 410. For example, the electronic device 101 may transmit a registration request (or access request) (for example, attach request) message including identity information (for example, IMSI) of the first SIM 410 to the network 700 (operation 1125).

According to an embodiment, upon receiving a registration request (or access request) (for example, attach request) message including identity information (for example, IMSI) of the first SIM 410 from the electronic device 101, the network 700 may determine whether service establishment by the electronic device 101 is necessary. The network 700 may transmit an IMEI request message to the electronic device 101, based on determining that service establishment related to the first SIM 410 by the electronic device 101 is necessary (operation 1127). As an example, the IMEI request message may include a security mode command.

According to an embodiment, the electronic device 101 (for example, a communication processor) may transmit information related to the second IMEI reallocated to the first SIM 410 to the network 700, based on the IMEI request message received from the network 700 (operation 1129). As an example, the information related to the second IMEI allocated to the first SIM 410 may be included in a security mode completed message and transmitted to the network 700.

According to an embodiment, the network 700 may determine whether to accept or reject service establishment related to the first SIM 410 by the electronic device 101, based on the second IMEI received from the electronic device 101. For example, when accepting service establishment related to the first SIM 410 by the electronic device 101, the network 700 may transmit a registration response (for example, attach accept) message including acceptance information to the electronic device 101 (operation 1131).

According to an embodiment, when accepting service establishment related to the first SIM 410 by the electronic device 101, the network 700 may transmit information related to the MSISDN allocated to the first SIM 410 to the electronic device 101 (operation 1133).

According to an embodiment, the electronic device 101 (for example, a communication processor) may determine that service establishment related to the first SIM 410 has succeeded, based on the registration response message including acceptance information received from the network 700.

According to an embodiment, the electronic device 101 (for example, a communication processor) may perform a procedure of registration to the network 700, based on determining that service establishment related to the first SIM 410 has succeeded.

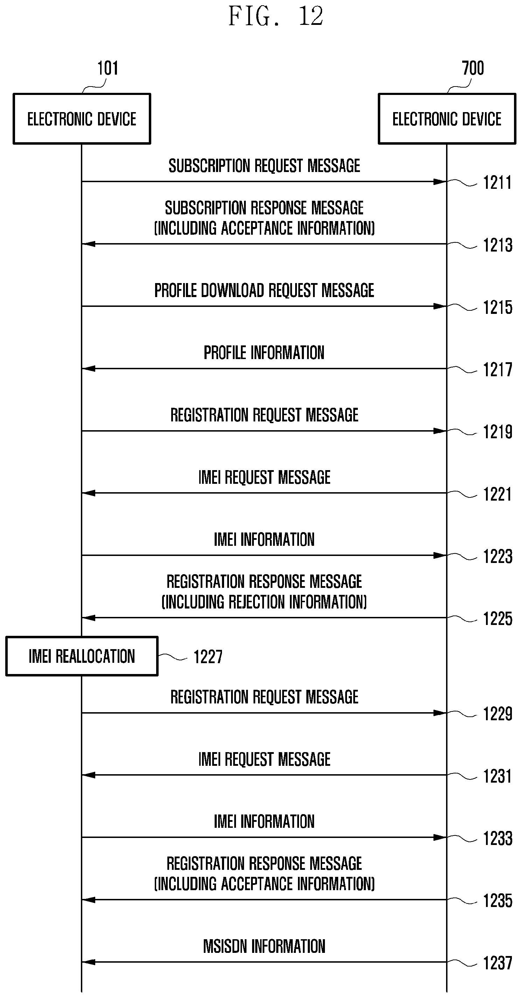

FIG. 12 illustrates an example of reallocating an IMEI to a first type of SIM in an electronic device according to an embodiment. As an example, the first type of SIM may include an eSIM or eUICC directly embedded in the electronic device 101.

According to an embodiment referring to FIG. 12, if a first SIM 410 is activated, the electronic device 101 may allocate a first IMEI among multiple IMEIs to the first SIM 410. The electronic device 101 (for example, an application processor) may transmit a subscription request message including the first IMEI to a network 700 (operation 1211).

According to an embodiment, the network 700 may determine whether to accept or reject subscription of the electronic device 101 to the network 700 (for example, communication operator network), based on the first IMEI included in the subscription request message received from the electronic device 101. For example, when accepting subscription of the electronic device 101, the network 700 may transmit a subscription response message including acceptance information to the electronic device 101 (operation 1213).

According to an embodiment, the electronic device 101 (for example, an application processor) may determine that subscription to the network 700 has succeeded, based on a subscription response message including acceptance information received from the network 700.

According to an embodiment, the electronic device 101 (for example, an application processor) may transmit a profile download request message related to the first SIM 410 of the first type to the network 700, based on confirming successful subscription to the network 700 (operation 1215).

According to an embodiment, the network 700 may transmit profile information related to the first SIM 410 to the electronic device 101, based on the profile download request message received from the electronic device 101 (operation 1217). As an example, the profile information related to the first SIM 410 may be acquired based on the EID and/or ICCID included in the profile download request message.

According to an embodiment, upon acquiring profile information related to the first SIM 410 from the network 700, the electronic device 101 (for example, a communication processor) may perform service establishment related to the first SIM 410. For example, the electronic device 101 may transmit a registration request (or access request) (for example, attach request) message including identity information (for example, IMSI) of the first SIM 410 to the network 700 (operation 1219).

According to an embodiment, upon receiving a registration request (or access request) message including identity information (for example, IMSI) of the first SIM 410 from the electronic device 101, the network 700 may determine whether service establishment related to the first SIM 410 by the electronic device 101 is necessary. The network 700 may transmit an IMEI request message to the electronic device 101, based on determining that service establishment by the electronic device 101 is necessary (operation 1221). As an example, the IMEI request message may include a security mode command.

According to an embodiment, the electronic device 101 (for example, a communication processor) may transmit information related to the first IMEI reallocated to the first SIM 410 to the network 700, based on the IMEI request message received from the network 700 (operation 1223). As an example, the information related to the first IMEI allocated to the first SIM 410 may be included in a security mode completed message and transmitted to the network 700.

According to an embodiment, the network 700 may determine whether to accept or reject service establishment related to the first SIM 410 by the electronic device 101, based on the first IMEI received from the electronic device 101. For example, when rejecting service establishment related to the first SIM 410 by the electronic device 101, the network 700 may transmit a registration response (for example, attach reject) message including rejection information to the electronic device 101 (operation 1225).

According to an embodiment, the electronic device 101 (for example, a communication processor) may determine that service establishment related to the first SIM 410 has failed, based on the registration response message including rejection information received from the network 700.

According to an embodiment, the electronic device 101 (for example, a communication processor) may reallocate an IMEI to the first SIM 410, based on determining that service establishment related to the first SIM 410 has failed (operation 1227). For example, the electronic device 101 (for example, an application processor) may identify whether there is an IMEI not allocated to the first SIM 410 and/or the second SIM 420 among the multiple IMEIs stored in the memory 440.

For example, if there is a second IMEI not allocated to the first SIM 410 and/or the second SIM 420, the electronic device 101 (for example, an application processor) may allocate (or reallocate) the second IMEI to the first SIM 410. As an example, if there are multiple IMEIs not allocated to the first SIM 410 and/or the second SIM 420, the electronic device 101 (for example, an application processor) may allocate (or reallocate) the second IMEI selected based on IMEI priority to the first SIM 410.

For example, if there is no IMEI not allocated to the first SIM 410 and/or the second SIM 420, the electronic device 101 (for example, an application processor) may allocate the second IMEI selected based on an IMEI allocation policy related to the first SIM 410 to the first SIM 410. As an example, the second IMEI selected based on the IMEI allocation policy may include the IMEI which has been allocated to the second SIM 420.

According to an embodiment, the electronic device 101 (for example, a communication processor) may perform service establishment related to the first SIM 410, based on allocation (or reallocation) of the second IMEI. For example, the electronic device 101 may transmit a registration request (or access request) (for example, attach request) message including identity information (for example, IMSI) of the first SIM 410 to the network 700 (operation 1229).

According to an embodiment, upon receiving a registration request (or access request) message including identity information (for example, IMSI) of the first SIM 410 from the electronic device 101, the network 700 may determine whether service establishment related to the first SIM 410 by the electronic device 101 is necessary. The network 700 may transmit an IMEI request message to the electronic device 101, based on determining that service establishment by the electronic device 101 is necessary (operation 1231). As an example, the IMEI request message may include a security mode command.

According to an embodiment, the electronic device 101 (for example, a communication processor) may transmit information related to the second IMEI reallocated to the first SIM 410 to the network 700, based on the IMEI request message received from the network 700 (operation 1233). As an example, the information related to the second IMEI reallocated to the first SIM 410 may be included in a security mode completed message and transmitted to the network 700.

According to an embodiment, the network 700 may determine whether to accept or reject service establishment related to the first SIM 410 by the electronic device 101, based on the second IMEI received from the electronic device 101. For example, when accepting service establishment related to the first SIM 410 by the electronic device 101, the network 700 may transmit a registration response (for example, attach accept) message including acceptance information to the electronic device 101 (operation 1235).

According to an embodiment, after accepting service establishment related to the first SIM 410 by the electronic device 101, the network 700 may transmit information related to the MSISDN allocated to the first SIM 410 to the electronic device 101 (operation 1237).

According to an embodiment, the electronic device 101 (for example, a communication processor) may determine that service establishment related to the first SIM 410 has succeeded, based on a registration response message including acceptance information received from the network 700.

According to an embodiment, the electronic device 101 (for example, a communication processor) may perform a procedure of registration to the network 700, based on determining that service establishment related to the first SIM 410 has succeeded.

According to an embodiment, upon allocating (or reallocating) the second IMEI which has been allocated to the second SIM 420 based on the IMEI allocation policy related to the first SIM 410 to the first SIM 410, the electronic device 101 may allocate (or reallocate) the first IMEI which has been allocated to the first SIM 410 to the second SIM 420. The electronic device 101 may perform a service establishment procedure related to the second SIM 420, based on the first IMEI. For example, if service establishment procedure related to the second SIM 420 based on the first IMEI has failed, the electronic device 101 may reallocate an IMEI to the second SIM 420, based on an IMEI allocation policy related to the second SIM 420. For example, if the IMEI to be reallocated to the second SIM 420 is the second IMEI reallocated to the first SIM 410, the electronic device 101 may identify the priority of the IMEI allocation policy related to the first SIM 410 and that of the IMEI allocation policy related to the second SIM 420. For example, if the priority of the IMEI allocation policy related to the first SIM 410 is higher than the priority of the IMEI allocation policy related to the second SIM 420, the electronic device 101 may determine that IMEI allocation to the second SIM 420 is limited. For example, if the priority of the IMEI allocation policy related to the second SIM 420 is higher than the priority of the IMEI allocation policy related to the first SIM 410, the electronic device 101 may reallocate the second IMEI to the second SIM 420. In this case, the electronic device 101 may determine that IMEI allocation to the first SIM 410 is limited.

For example, if service establishment related to the second SIM 420 based on the first IMEI has failed, the electronic device 101 may determine that wireless communication related to the second SIM 420 is limited.

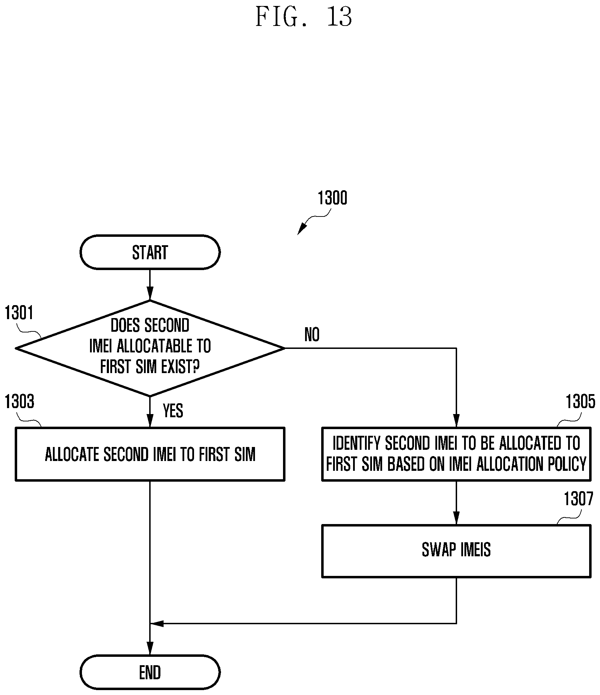

FIG. 13 is a flowchart 1300 for allocating an IMEI to a SIM, based on an IMEI allocation policy, in an electronic device according to an embodiment. According to an embodiment, at least a part of FIG. 13 may include detailed operations of operation 903 in FIG. 9. In the following embodiment, respective operations may be performed successively, but are not necessarily performed successively. For example, the order of respective operations may be changed, and at least two operations may be performed in parallel. As an example, the electronic device in FIG. 13 may be the electronic device 101 in FIG. 1, FIG. 2, FIG. 3, or FIG. 4.

According to an embodiment referring to FIG. 13, upon determining that service establishment related to the first SIM 410 based on the first IMEI has failed (for example, "Yes" in operation 901 in FIG. 9), the electronic device (for example, the processor 120 in FIG. 1 or the processor 400 in FIG. 4) may identify whether there is an IMEI allocatable to the first SIM 410 among the multiple IMEIs stored in the electronic device 101 in operation 1301. For example, the processor 400 may identify whether there is an IMEI not allocated to the first SIM 410 and/or the second SIM 420 among the multiple IMEIs stored in the memory 440. For example, if there is at least one IMEI not allocated to the first SIM 410 and/or the second SIM 420, the processor 400 may determine that there is an IMEI allocatable to the first SIM 410. For example, if there is no IMEI not allocated to the first SIM 410 and/or the second SIM 420, the processor 400 may determine that there is no IMEI allocatable to the first SIM 410.

According to an embodiment, if there is an IMEI allocatable to the first SIM 410 (for example, "Yes" in operation 1301), the electronic device (for example, the processor 120 or 400) may allocate (or reallocate) the second IMEI which is allocatable to the first SIM 410 to the first SIM 410, in operation 1303. For example, if there is a second IMEI not allocated to the first SIM 410 and/or the second SIM 420, the processor 400 may allocate (or reallocate) the second IMEI to the first SIM 410. For example, if there are multiple IMEIs not allocated to the first SIM 410 and/or the second SIM 420, the processor 400 may allocate (or reallocate) the second IMEI selected based on IMEI priority to the first SIM 410. As an example, the second IMEI selected based on IMEI priority may be allocated to a communication protocol stack related to the first SIM 410 (for example, the first communication protocol stack 314 and/or the second communication protocol stack 316 in FIG. 3).

According to an embodiment, if there is no IMEI allocatable to the first SIM 410 (for example, "No" in operation 1301), the electronic device (for example, the processor 120 or 400) may confirm that the second IMEI allocated to the second SIM 420 based on the IMEI allocation policy related to the first SIM 410 is the IMEI to be allocated to the first SIM 410 in operation 1305. For example, the IMEI allocation policy may include, as in Table 3 below, information (target IMEI) related to the target IMEI based on at least one of the country specific code (CSC) of the communication operator (or the electronic device 101) ("carrier"), the type of the SIM ("SIM type"), or the service type. As an example, "action" in Table 3 may indicate an operation of allocating an IMEI to a SIM or swapping the same, based on the IMEI allocation policy of the SIM.

**[Table 3]**

| priority | carrier | SIM type | service type | target IMEI | action |
|---|---|---|---|---|---|
| 1 | OP1 | pSIM | activation | primary, secondary | Allocation |
| **2** | **OP2** | **eSIM** | **activation** | **primary** | **Allocation, Swap** |
| 3 | OP2 | pSIM | activation | primary, secondary | Allocation |
| 4 | OP2 | eSIM | activation | primary | Allocation, Swap |
| 5 | OP2 | (N/A) | emergency call | others | Allocation |
| 6 | OP3 | eSIM | activation | secondary | Allocation |

For example, the processor 400 may identify (or select) the second IMEI (for example, "primary" in Table 3) which has been allocated to the second SIM 420, based on the IMEI allocation policy related to the first SIM 410, to be the IMEI to be allocated (or reallocated) to the first SIM 410. According to an embodiment, the electronic device (for example, the processor 120 or 400) may swap the IMEI of the first SIM 410 and that of the second SIM 420, based on the IMEI allocation policy related to the first SIM 410 in operation 1303. For example, the processor 400 may allocate (or reallocate) the second IMEI which has been allocated to the second SIM 420 to the first SIM 410, based on the IMEI allocation policy (for example, swap) related to the first SIM 410. The processor 400 may allocate (or reallocate) the first IMEI (for example, "secondary" in Table 3) which has been allocated to the first SIM 410 to the second SIM 420.

According to an embodiment, the electronic device 101 may perform a service establishment procedure related to the first SIM 410, based on the second IMEI reallocated to the first SIM 410. The electronic device 101 may perform a service establishment procedure related to the second SIM 420, based on the first IMEI reallocated to the second SIM 420.

According to an embodiment, if the first SIM 410 is activated (for example, operation 601 in FIG. 6), the electronic device 101 may allocate an IMEI to the first SIM 410 based on operations 1301 to 1307 in FIG. 13.

According to an embodiment, if there is no IMEI allocatable to the first SIM 410 among the multiple IMEIs stored in the electronic device 101, the electronic device 101 may attempt service establishment related to the first SIM 410 a designated number of times, based on the first IMEI allocated to the first SIM 410.

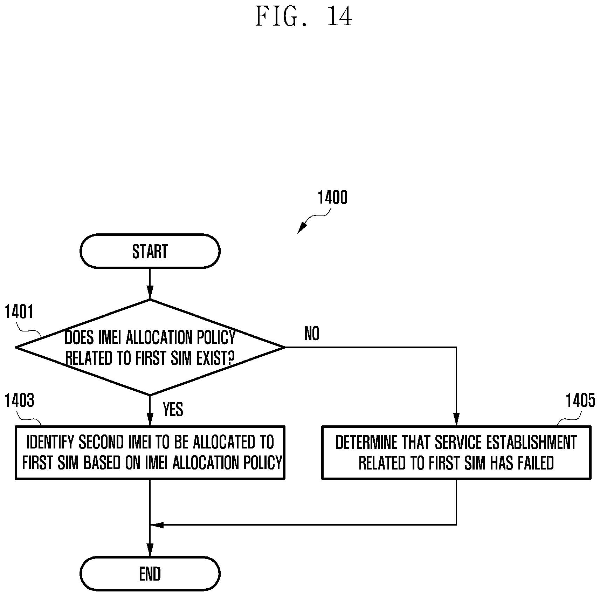

FIG. 14 is a flowchart 1400 for allocating an IMEI to a SIM, based on an IMEI allocation policy, in an electronic device according to an embodiment. According to an embodiment, at least a part of FIG. 14 may include detailed operations of operation 1305 in FIG. 13. In the following embodiment, respective operations may be performed successively, but are not necessarily performed successively. For example, the order of respective operations may be changed, and at least two operations may be performed in parallel. As an example, the electronic device in FIG. 14 may be the electronic device 101 in FIG. 1, FIG. 2, FIG. 3, or FIG. 4.

According to an embodiment referring to FIG. 14, if there is no IMEI allocatable to the first SIM 410 (for example, "No" in operation 1301 in FIG. 13), the electronic device (for example, the processor 120 in FIG. 1 or the processor 400 in FIG. 4) may identify whether there is an IMEI allocation policy related to the first SIM 410 in operation 1401. For example, the processor 400 may identify whether there is an IMEI allocation policy related to the first SIM 410, which has failed in service establishment, in an IMEI allocation policy list such as Table 3.

According to an embodiment, if there is an IMEI allocation policy related to the first SIM 410 (for example, "Yes" in operation 1401), the electronic device (for example, the processor 120 or 400) may identify an IMEI to be allocated to the first SIM 410, based on the IMEI allocation policy related to the first SIM 410, in operation 1401. For example, the processor 400 may identify (or select) the second IMEI (for example, "primary" in Table 3) which has been allocated to the second SIM 420, based on the IMEI allocation policy related to the first SIM 410, to be the IMEI to be allocated (or reallocated) to the first SIM 410.

According to an embodiment, if there is no IMEI allocation policy related to the first SIM 410 (for example, "No" in operation 1401), the electronic device (for example, the processor 120 or 400) may determine that service establishment related to the first SIM 410 has failed. For example, if there is no IMEI allocation policy related to the first SIM 410, the processor 400 may determine that IMEI reallocation to the first SIM 410 has failed. The processor 400 may determine that service establishment related to the first SIM 410 has failed (or been limited) based on the failed IMEI reallocation to the first SIM 410. The processor 400 may control an output device (not illustrated) of the electronic device 101 so as to output service establishment failure information (or service establishment limitation information) related to the first SIM 410. As an example, the output device may include at least one of a display, an audio output device, a vibrating device, or an indicator.

According to an embodiment, if there are multiple IMEI allocation policies related to the first SIM 410, the electronic device 101 may allocate (or reallocate) an IMEI to the first SIM 410, based on an IMEI allocation policy selected based on an IMEI allocation policy priority (for example, "priority" in Table 3).

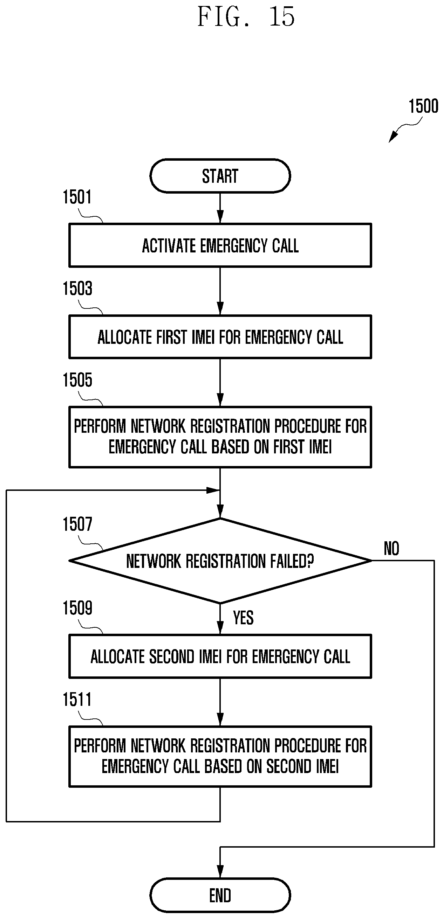

FIG. 15 is a flowchart 1500 for allocating an IMEI related to an emergency call in an electronic device according to an embodiment. In the following embodiment, respective operations may be performed successively, but are not necessarily performed successively. For example, the order of respective operations may be changed, and at least two operations may be performed in parallel. As an example, the electronic device in FIG. 15 may be the electronic device 101 in FIG. 1, FIG. 2, FIG. 3, or FIG. 4.

According to an embodiment referring to FIG. 15, the electronic device (for example, the processor 120 in FIG. 1 or the processor 400 in FIG. 4) may activate an emergency call function in operation 1501. For example, upon sensing the occurrence of an emergency call event, the processor 400 may execute an application program related to an emergency call. As an example, the emergency call event may occur based on at least one of detection (or reception) of a selection input corresponding to an object related to an emergency call, reception of a control signal related to an emergency call, or detection of a gesture input related to an emergency call.

According to an embodiment, the electronic device (for example, the processor 120 or 400) may allocate a first IMEI among multiple IMEIs stored in the electronic device 101 as an IMEI for an emergency call in operation 1503. For example, if there is no activated SIM in the electronic device 101, the processor 400 may allocate the first IMEI among the multiple IMEIs stored in the memory 440 as an IMEI for an emergency call. As an example, the first IMEI may be selected based on an IMEI allocation policy related to an emergency call, among the multiple IMEIs, or selected as desired.

According to an embodiment, the electronic device (for example, the processor 120 or 400) may perform a network registration procedure for an emergency call, based on the first IMEI, in operation 1505. For example, the processor 400 may transmit a registration request (for example, attach request) message including information related to the first IMEI allocated for an emergency call to the network 700.

According to an embodiment, the electronic device (for example, the processor 120 or 400) may identify whether network registration for an emergency call has failed, in operation 1507. For example, upon receiving a registration response (for example, attach reject) message including rejection information (for example, illegal Me(0x6)) from the network 700, the processor 400 determine that network registration for an emergency call has failed. For example, upon receiving a registration response (for example, attach accept) message including acceptance information from the network 700, the processor 400 determine that network registration for an emergency call has succeeded.

According to an embodiment, upon determining that network registration for an emergency call has failed (for example, "Yes" in operation 1507), the electronic device (for example, the processor 120 or 400) may allocate (or reallocate) a second IMEI among the multiple IMEIs stored in the electronic device 101 as the IMEI for an emergency call in operation 1509. For example, the processor 400 may allocate (or reallocate) the second IMEI which is different from the first IMEI among the multiple IMEIs stored in the memory 440 as the IMEI for an emergency call, based on an IMEI allocation policy related to an emergency call.

According to an embodiment, the electronic device (for example, the processor 120 or 400) may perform a network registration procedure for an emergency call, based on the second IMEI, in operation 1511. For example, the processor 400 may transmit a registration request (for example, attach request) message including information related to the second IMEI allocated for an emergency call to the network 700.

According to an embodiment, the electronic device (for example, the processor 120 or 400) may identify whether network registration for an emergency call has failed, in operation 1507.

According to an embodiment, upon determining that network registration for an emergency call has succeeded (for example, "No" in operation 1507), the electronic device (for example, the processor 120 or 400) may end the embodiment for allocating an IMEI for an emergency call. For example, upon determining that network registration for an emergency call has succeeded, the processor 400 may control the communication circuit 430 so as to perform an emergency call function through the network.

According to an embodiment, a method for operating an electronic device (for example, the electronic device 101 in FIG. 1, FIG. 2, FIG. 3, or FIG. 4) including a first SIM (for example, the SIM 196 in FIG. 1 or the first SIM 410 in FIG. 4) and a second SIM (for example, the SIM 196 in FIG. 1 or the second SIM 420 in FIG. 4) may include an operation of performing a service establishment procedure related to the first SIM, based on a first IMEI among multiple IMEIs. According to an embodiment, the method for operating an electronic device may include an operation of identifying a second IMEI different from the first IMEI, among the multiple IMEIs, if service establishment related to the first SIM based on the first IMEI has failed. According to an embodiment, the method for operating an electronic device may include an operation of performing a service establishment procedure related to the first SIM, based on the second IMEI.

According to an embodiment, the operation of identifying a second IMEI may include an operation of identifying a second IMEI not allocated to the first SIM and the second SIM, among the multiple IMEIs, if service establishment related to the first SIM has failed.

According to an embodiment, the operation of identifying a second IMEI may include an operation of identifying whether there is an IMEI not allocated to the first SIM and the second SIM, among the multiple IMEIs, if service establishment related to the first SIM has failed, and an operation of identifying a second IMEI among the multiple IMEIs, based on an IMEI allocation policy related to the first SIM if there is no IMEI not allocated to the first SIM and the second SIM.

According to an embodiment, the method for operating an electronic device may include an operation of allocating a second IMEI to the first SIM, an operation of allocating the first IMEI which has been allocated to the first SIM to the second SIM, based on allocation of the second IMEI to the first SIM, if the second IMEI has been allocated to the second SIM, and an operation of performing a service establishment procedure related to the second SIM, based on the first IMEI.

According to an embodiment, the method for operating an electronic device may include an operation of identifying whether there is an IMEI allocation policy related to the first SIM if there is no IMEI not allocated to the first SIM and the second SIM, and an operation of determining that service establishment related to the first SIM has failed if there is no IMEI allocation policy related to the first SIM.

According to an embodiment, the IMEI allocation policy related to the first SIM may include information related to at least one of the type of the first SIM, the communication operator related to the first SIM, the service type related to the first SIM, the target IMEI, or the manner of switching to the target IMEI.

According to an embodiment, the operation of performing a service establishment procedure related to the first SIM may include an operation of performing a procedure of subscription to the communication operator related to the first SIM based on the first IMEI, an operation of acquiring a profile related to the first SIM if subscription to the communication operator has succeeded, and an operation of a service establishment procedure related to the first SIM, based on acquisition of the profile.

According to an embodiment, the operation of identifying a second IMEI may include an operation of identifying a second IMEI different from the first IMEI, among the multiple IMEIs, if subscription to the communication operator has failed, or if service establishment related to the first SIM has failed.

According to an embodiment, the method for operating an electronic device may include an operation in which, if a first IMEI or a second IMEI has been allocated to the first SIM, information related to the first IMEI or the second IMEI allocated to the first SIM is stored.

According to an embodiment, the method for operating an electronic device may include an operation of performing a procedure of registration to a network if service establishment related to the first SIM based on the second IMEI has succeeded.

Embodiments of the disclosure provided in the specification and the drawings are only specific examples presented to easily describe technical content according to embodiments of the disclosure and to help understanding of embodiments of the disclosure, and are not intended to limit the scope of embodiments of the disclosure. Therefore, the scope of various embodiments of the disclosure is to be interpreted as encompassing all changed or modified forms derived based on the technical idea of various embodiments of the disclosure in addition to the embodiments disclosed herein.

## Claims

1. An electronic device (101) comprising:
a memory (440) configured to store information related to multiple international mobile equipment identities (IMEIs);
multiple subscriber identity modules (196) comprising a first subscriber identity module (410) and a second subscriber identity module (420);
a communication circuit (192 or 430); and
at least one processor (120 or 400) operatively connected to the memory (440), the first subscriber identity module (410), the second subscriber identity module (420), and the communication circuit (192 or 430),
wherein the at least one processor (120 or 400) is configured to:
perform a service establishment procedure related to the first subscriber identity module (410), based on the first IMEI among the multiple IMEIs;
in case that service establishment related to the first subscriber identity module (410) based on the first IMEI has failed, identify a second IMEI different from the first IMEI among the multiple IMEIs; and
perform a service establishment procedure related to the first subscriber identity module (410), based on the second IMEI.

2. The electronic device of claim 1, wherein the at least one processor (120 or 400) is configured to identify the second IMEI not allocated to the first subscriber identity module (410) and the second subscriber identity module (420) among the multiple IMEIs.

3. The electronic device of one of claims 1 and 2, wherein the at least one processor (120 or 400) is configured to, in case that there is no IMEI not allocated to the first subscriber identity module (410) and the second subscriber identity module (420) among the multiple IMEIs, select the second IMEI among the multiple IMEIs, based on an IMEI allocation policy related to the first subscriber identity module (410).

4. The electronic device of one of claims 1 to 3, wherein the at least one processor (120 or 400) is configured to:
in case that the second IMEI has been allocated to the second subscriber identity module (420), allocate the first IMEI which has been allocated to the first subscriber identity module (410) to the second subscriber identity module (420), based on allocation of the second IMEI to the first subscriber identity module (410); and
perform a service establishment procedure related to the second subscriber identity module (420), based on the first IMEI.

5. The electronic device of one of claims 1 to 3, wherein the at least one processor (120 or 400) is configured to:
in case that there is no IMEI not allocated to the first subscriber identity module (410) and the second subscriber identity module (420), identify whether there is an IMEI allocation policy related to the first subscriber identity module (410); and
in case that selection of the second IMEI has failed because there is no IMEI allocation policy related to the first subscriber identity module (410), determine that service establishment related to the first subscriber identity module (410) has failed.

6. The electronic device of claim 1, wherein the at least one processor (120 or 400) is configured to:
perform a procedure of subscription to a communication operator related to the first subscriber identity module (410), based on an IMEI allocated to the first subscriber identity module (410);
in case that subscription to the communication operator has succeeded, acquire a profile related to the first subscriber identity module (410); and
perform a service establishment procedure related to the first subscriber identity module (410), based on the IMEI allocated to the first subscriber identity module (410) and the profile.

7. The electronic device of one of claims 1 to 6, wherein the at least one processor (120 or 400) is configured to:
in case that subscription to the communication operator has failed, or in case that service establishment related to the first subscriber identity module (410) has failed, identify a second IMEI different from the first IMEI among the multiple IMEIs; and
perform a subscription procedure or a service establishment procedure related to the first subscriber identity module (410), based on the second IMEI.

8. The electronic device of one of claims 1, 6, and 7, wherein the at least one processor (120 or 400) is configured to:
transmit a message related to a subscription request comprising information related to an IMEI allocated to the first subscriber identity module (410) to a network; and
in case that a message related to subscription acceptance is received in response to the messages related to a subscription request, determine that subscription related to the first subscriber identity module (410) is completed.

9. The electronic device of one of claims 1, 6, and 7, wherein the at least one processor (120 or 400) is configured to:
transmit a message related to a registration request of the first subscriber identity module (410) to a network;
in case that a message related to an IMEI request is received in response to the message related to a registration request, transmit information related to an IMEI allocated to the first subscriber identity module (410) to the network; and
in case that a message related to registration acceptance is received from the network, determine that service establishment related to the first subscriber identity module (410) is completed.

10. A method for operating an electronic device (101) comprising multiple subscriber identity modules (196) comprising a first subscriber identity module (410) and a second subscriber identity module (420), the method comprising:
performing a service establishment procedure related to the first subscriber identity module (410), based on a first IMEI among multiple international mobile equipment identities (IMEIs) stored in the electronic device (101);
in case that service establishment related to the first subscriber identity module (410) based on the first IMEI has failed, identifying a second IMEI different from the first IMEI among the multiple IMEIs; and
performing a service establishment procedure related to the first subscriber identity module (410), based on the second IMEI.

11. The method of claim 10, wherein the identifying of the second IMEI comprises, in case that service establishment related to the first subscriber identity module (410) has failed, identifying the second IMEI not allocated to the first subscriber identity module (410) and the second subscriber identity module (420) among the multiple IMEIs.

12. The method of one of claims 10 and 11, wherein the identifying of the second IMEI comprises, in case that service establishment related to the first subscriber identity module has failed, and in case that there is no IMEI not allocated to the first subscriber identity module (410) and the second subscriber identity module (420) among the multiple IMEIs, selecting the second IMEI among the multiple IMEIs, based on an IMEI allocation policy related to the first subscriber identity module (410).

13. The method of one of claims 10 to 12, further comprising:
in case that the second IMEI allocated to the first subscriber identity module (410) has been allocated to the second subscriber identity module (420), allocate the first IMEI which has been allocated to the first subscriber identity module (410) to the second subscriber identity module (420), based on allocation of the second IMEI to the first subscriber identity module (410); and
performing a service establishment procedure related to the second subscriber identity module (420), based on the first IMEI.

14. The method of one of claims 10 to 12, further comprising:
in case that there is no IMEI not allocated to the first subscriber identity module (410) and the second subscriber identity module (420), identifying whether there is an IMEI allocation policy related to the first subscriber identity module (410); and
in case that selection of the second IMEI has failed because there is no IMEI allocation policy related to the first subscriber identity module (410), determining that service establishment related to the first subscriber identity module (410) has failed.

15. The method of claim 10, wherein the performing of a service establishment procedure related to the first subscriber identity module (410) comprises:
performing a procedure of subscription to a communication operator related to the first subscriber identity module (410), based on an IMEI allocated to the first subscriber identity module (410);
in case that subscription to the communication operator has succeeded, acquiring a profile related to the first subscriber identity module (410); and
performing a service establishment procedure related to the first subscriber identity module (410), based on the IMEI allocated to the first subscriber identity module (410) and the profile.
